# EUROPEAN PATENT APPLICATION

(11) **EP 2 611 206 A2**
(43) Date of publication of application: **03.07.2013**
(21) Application number: 12199186.3
(22) Date of filing: 21.12.2012
(51) Int. Cl.: H04N 21/6547, H04N 21/485

(54) **Display apparatus and control method thereof**

(30) Priority: 27.12.2011 KR 20110143678; 30.12.2011 KR 20110147226; 30.12.2011 KR 20110147182; 30.12.2011 KR 20110147247; 27.01.2012 KR 20120008343; 01.06.2012 KR 20120058997
(71) Applicant: Samsung Electronics Co., Ltd., Gyeonggi-do 443-742 (KR)
(72) Inventor: Kim, Jong-lok, Seoul (KR); Choi, Jun-sik, Suwon-si (KR); Lee, Jae-hwang, Seoul (KR); Ko, Chang-seog, Hwaseong-si (KR); Kim, Jung-geun, Suwon-si (KR); Chung, Sung-moon, Yongin-si (KR)
(74) Representative: Waddington, Richard

(57) **Abstract**

A display apparatus and a control method thereof are provided. The display apparatus includes a connection unit which is connected to an upgrade apparatus; an image processing unit which processes an image signal; a display unit which displays an image based on the processed image signal; a storage unit which stores setting information on a plurality of items related to the display apparatus; and a controller which changes the setting information stored in the storage unit according to the connected upgrade apparatus and which displays the image based on the changed setting information when the upgrade apparatus is connected to the display apparatus.

## Description

### BACKGROUND

### 1. Field

Apparatuses and methods consistent with exemplary embodiments relate to a display apparatus and a control method thereof, and more particularly to a display apparatus which upgrades a function thereof and a control method thereof.

### 2. Description of the Related Art

A display apparatus, such as a television (TV), is capable of upgrading its functions by updating its software. However, since such software updating has limitations in the performance of offered functions, there is a demand for efficiently upgrading the functions.

The display apparatus stores information on a system configuration and user settings (hereinafter, "setting information") and performs an operation, e.g., displaying an image, based on the stored setting information.

However, there are situations where the existing setting information needs to be used when a function of the display apparatus has changed. For example, when a function of the display apparatus is upgraded. That is, if it is not possible to use the existing setting information after upgrading a function, a user may need to repeatedly set up the setting information which is inconvenient to a user.

Recently, users have installed and utilized their desired software (hereinafter, "programs"), such as applications, by using various types of display apparatuses, e.g., a smartphone and a smart TV, which can be used instead of a personal computer (PC).

Such setting information and installation information on programs (hereinafter, collectively "setting information") are stored in a server based on a user's account. Relevant setting information is transmitted to the display apparatus or a relevant program is installed and updated depending on a user account input when the user accesses the display apparatus.

However, this method is inconvenient since a user must personally log in or set up a configuration.

### SUMMARY

An upgrade apparatus connectable to a display apparatus may be used to efficiently upgrade a function of the display apparatus. Any one among a plurality of upgrade apparatuses may be connected to the display apparatus. When an upgrade apparatus is connected to the display apparatus, it is necessary to install setting information suitable for the display apparatus and the connected upgrade apparatus and to install and update a program. When a function is upgraded using the upgrade apparatus, setting information may be present in both the display apparatus and the upgrade apparatus. If the setting information in the two apparatuses is different from each other, a user may be inconvenienced. When the connected upgraded apparatus is removed, the user needs to easily recognize the removal of the upgraded apparatus.

According to the present invention there is provided an apparatus and method as set forth in the appended claims. Other features of the invention will be apparent from the dependent claims, and the description which follows.

Accordingly, one or more exemplary embodiments provide a display apparatus which enables convenient use of existing setting information after upgrading a function of the display apparatus using an upgrade apparatus, and a control method thereof.

Further, one or more exemplary embodiments provide a display apparatus which is capable of automatically installing setting information and installing and updating a program, the display apparatus being connected to an upgrade apparatus, and a control method thereof.

Also, one or more exemplary embodiments provide a display apparatus which applies an update to both an upgrade apparatus and the display apparatus when updating setting information using the upgrade apparatus to upgrade a function, and an image processing apparatus, a control method thereof, and a display system.

In addition, one or more exemplary embodiments provide a display apparatus which provides increased user convenience by informing the user of a removal state of an upgrade apparatus when the upgrade apparatus, which upgrades a function, is removed., and a control method for the display apparatus.

According to an aspect of an exemplary embodiment, there is provided a display apparatus including: a connection unit which is connected to an upgrade apparatus; an image processing unit which processes an image signal; a display unit which displays an image based on the processed image signal; a storage unit which stores setting information on a plurality of items related to the display apparatus; and a controller which changes the setting information stored in the storage unit according to the connected upgrade apparatus and which displays the image based on the changed setting information when the upgrade apparatus is connected.

The controller may compare the plurality of items of the setting information stored in the storage unit and a plurality of items of the upgrade apparatus and may change the setting information according to a result of the comparison.

The controller may display a user interface (UI) to display changes in the setting information according to the result of the comparison.

The controller may back up the setting information and may restore the backed up setting information according to upgrading performed with the upgrade apparatus.

The setting information may include a plurality of categories and the controller may back up or restore the setting information on at least one selected category among the plurality of categories.

The controller may back up the setting information which has changed from a default value.

The display apparatus may further include a communication unit which communicates with a setting information management device which manages the setting information, and wherein the controller may register the setting information in the setting information management device, and change the setting information based on the registered setting information when the upgrade apparatus is replaced.

The controller may perform an update corresponding to the replaced upgrade apparatus based on the registered setting information.

When updating the setting information, the controller updates setting information on the display apparatus and updates setting information on the upgrade apparatus corresponding to a relevant item.

The controller may display the image based on a selected one of the setting information on the display apparatus and setting information on the upgrade apparatus.

The controller may report detachment of the upgrade apparatus when the upgrade apparatus is detached.

The controller may return the setting information to an original state before the upgrade apparatus is connected.

According to an aspect of another exemplary embodiment, there is provided a control method of a display apparatus displaying an image based on an image signal, the control method including: identifying whether the display apparatus is connected to an upgrade apparatus; changing setting information on at least one of a plurality of items related to the display apparatus stored in a storage unit according to the connected upgrade apparatus when the upgrade apparatus is connected; and displaying the image based on the changed setting information.

The changing may include comparing the plurality of items of the setting information stored in the storage unit and the plurality of items of the upgrade apparatus and changing the setting information according to a result of the comparison.

The control method may further include displaying a user interface (UI) which displays changes to the setting information according to the result of the comparison.

The control method may include backing up the setting information and restoring the backed up setting information according to an upgrading performed with the upgrade apparatus.

The setting information may include a plurality of categories and the backing up or the restoring may include backing up or restoring setting information on at least one selected category among the plurality of categories.

The backing up may include backing up setting information which has changed from a default value.

The control method may further include registering the setting information in a setting information management device, and wherein the changing may include changing the setting information based on the registered setting information when the upgrade apparatus is replaced.

The control method may further include performing an update corresponding to the replaced upgrade apparatus based on the registered setting information.

The control method may further include updating setting information on the display apparatus and setting information on the upgrade apparatus corresponding to a relevant item when updating the setting information.

The displaying the image may include displaying the image based on a selected one of the setting information on the display apparatus and setting information on the upgrade apparatus.

The control method may further include reporting detachment of the upgrade apparatus when the upgrade apparatus is detached.

The control method may further include returning the setting information to an original state before the upgrade apparatus is connected.

As described above, according to one or more exemplary embodiments, existing setting information may be conveniently used after upgrading a function of a display apparatus using an upgrade apparatus.

Further, according to one or more exemplary embodiments, it may be automatically carried out installing setting information suitable for a display apparatus and an upgrade apparatus connected to the display apparatus and installing and updating a program.

Also, according to one or more exemplary embodiments, when updating setting information is performed by using an upgrade apparatus, an update may be applied to both the upgrade apparatus and a display apparatus, thereby providing improved convenience to a user.

In addition, according to one or more exemplary embodiments, when an upgrade apparatus which upgrades a function is removed, a user may be informed of a removal state of the upgrade apparatus, thereby providing improved convenience to a user.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram illustrating a display apparatus according to an exemplary embodiment;
FIG. 2 is a block diagram illustrating a configuration of the display apparatus of FIG. 1;
FIG. 3 is a flowchart illustrating a control method of the display apparatus of FIG. 2;
FIG. 4 shows an illustrative UI informing a user that an upgrade apparatus has been connected;
FIG. 5 is a flowchart illustrating a detailed process of comparing items described with reference to FIG. 3;
FIG. 6 shows an illustrative UI when the items are the same;
FIG. 7 shows an illustrative UI when an item is changed;
FIG. 8 shows an illustrative UI when there is no corresponding item;
FIG. 9 shows an illustrative UI informing a user of completion of upgrading;
FIG. 10 is a block diagram illustrating a display apparatus according to another exemplary embodiment;
FIG. 11 is a block diagram illustrating a configuration of the display apparatus shown in FIG. 10;
FIG. 12 is a flowchart illustrating a control method of the display apparatus shown in FIG. 11;
FIG. 13 is a flowchart illustrating a process of backing up setting information as shown in FIG. 12 in detail;
FIG. 14 shows an illustrative UI for selecting a category of setting information to be backed up;
FIG. 15 illustrates the UI of FIG. 14 in detail;
FIG. 16 is a flowchart illustrating another control method of a display apparatus;
FIG. 17 shows an illustrative UI with respect to restoration of setting information;
FIG. 18 shows another illustrative UI with respect to restoration of setting information;
FIG. 19 is a flowchart illustrating another example of a process of backing up the setting information shown in FIG. 12;
FIG. 20 illustrates memory structures of setting information backed up and restored;
FIG. 21 is a block diagram illustrating a display apparatus according to another exemplary embodiment;
FIGs. 22 and 23 are block diagrams illustrating a situation where a display apparatus or an upgrade apparatus is replaced;
FIG. 24 is a block diagram illustrating a configuration of the display apparatus shown in FIG. 21;
FIGs. 25 to 28 illustrate control methods of the display apparatus of FIG. 24;
FIG. 29 is a block diagram illustrating a configuration of a display system according to an exemplary embodiment;
FIG. 30 illustrates a situation where a display apparatus updates both first setting information and second setting information;
FIG. 31 illustrates a case where an upgrade apparatus updates both the first setting information and the second setting information;
FIG. 32 is a block diagram illustrating a configuration of the display apparatus of FIG. 29;
FIG. 33 is a block diagram illustrating a configuration of the upgrade apparatus of FIG. 29;
FIG. 34 is a flowchart illustrating a control method of the display apparatus of FIG. 32;
FIG. 35 is a flowchart illustrating another control method of the display apparatus of FIG. 32;
FIG. 36 is a flowchart illustrating a control method of an upgrade apparatus of FIG. 33;
FIG. 37 is a flowchart illustrating another control method of an upgrade apparatus of FIG. 33;
FIG. 38 is a block diagram illustrating a display apparatus according to another exemplary embodiment;
FIG. 39 is a block diagram illustrating a configuration of the display apparatus of FIG. 38;
FIG. 40 is a flowchart illustrating a control method of the display apparatus of FIG. 39;
FIG. 41 shows an illustrative UI informing a user of removal of an upgrade apparatus;
FIG. 42 is a flowchart illustrating another control method of the display apparatus of FIG. 39;
FIG. 43 shows an illustrative UI for determining whether to return to a former state before the upgrade apparatus is connected;
FIG. 44 shows an illustrative UI showing progression of the return to the former state before the upgrade apparatus is connected; and
FIG. 45 shows an illustrative UI showing completion of the return to the former state before the upgrade apparatus is connected;

### DETAILED DESCRIPTION OF EXEMPLARY EMBODIMENTS

Exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

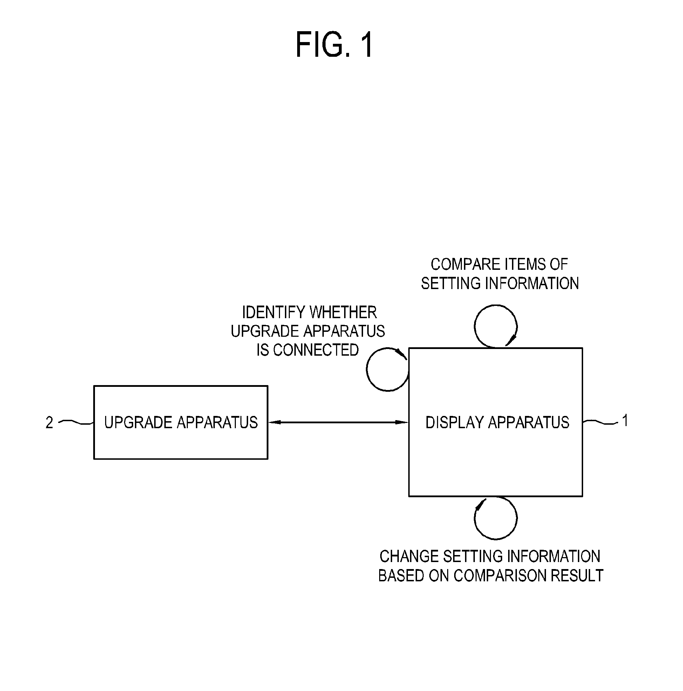

FIG. 1 is a block diagram illustrating a display apparatus 1 according to an exemplary embodiment. The display apparatus 1 may be configured as, for example, a TV. An upgrade apparatus 2 may be mounted on the display apparatus 1. The upgrade apparatus 2 upgrades a function of the display apparatus 1. The functions of the display apparatus 1 may include any function performable by the display apparatus 1, for example, a TV function, an image displaying function of an external imaging device, a multimedia content reproducing function, and a network function. The display apparatus 1 performs an upgraded function using the mounted upgrade apparatus 2. The upgrade apparatus 2 includes hardware and/or software necessary to upgrade the display apparatus 1. For example, the upgrade apparatus 2 may include an image processing unit, which has been more recently upgraded than an image processing unit (described later) of the display apparatus 1. Alternatively, the upgrade apparatus 2 may include a controller which is more advanced than a controller (described later) of the display apparatus 1. The display apparatus 1 may replace one of its functions with an upgraded function of the upgrade apparatus 2, or may perform both one of its functions and a function of the upgrade apparatus 2 using the upgrade apparatus 2.

The display apparatus 1 uses setting information in performing a function. The setting information includes any information to be used for performing various functions. For example, setting information can include a user's favorite channel, brightness of an image, and volume. The setting information on the display apparatus 1 is stored in a storage unit (described later) and is used to perform a function.

The display apparatus 1 changes the setting information corresponding to the upgrade apparatus 2. That is, the display apparatus 1 compares an item in the setting information stored in the storage unit with a corresponding item of the upgrade apparatus 2, changes the setting information based on a comparison result, and displays an image based on the changed setting information. In the exemplary embodiment, the item in the setting information is a function item corresponding to the setting information.

Accordingly, even after a function of the display apparatus 1 is upgraded using the upgrade apparatus 2, the existing setting information may be suitably used, thereby being more convenient for a user.

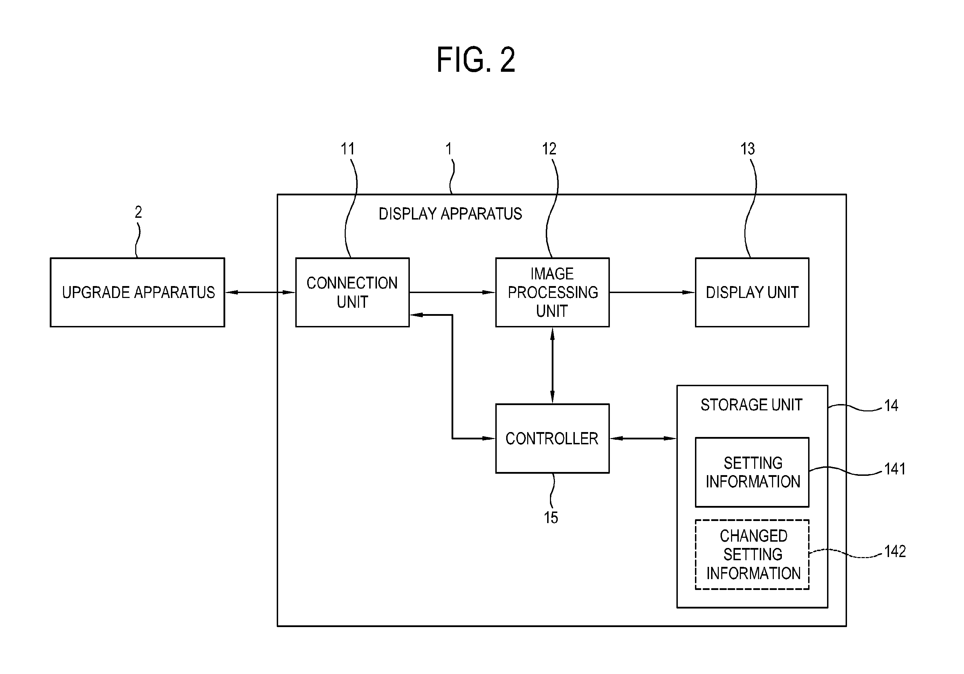

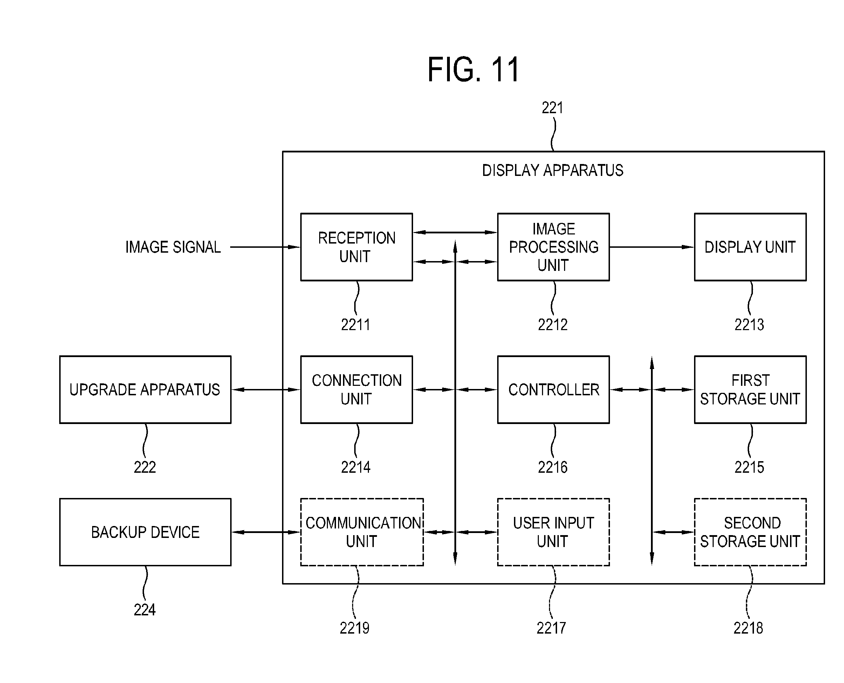

FIG. 2 is a block diagram illustrating a configuration of the display apparatus 1 of FIG. 1. The display apparatus 1 includes a connection unit 11, an image processing unit 12, a display unit 13, a storage unit 14, and a controller 15. The display apparatus 1 may further include a reception unit 2211, as shown in FIG. 11, which receives an image signal. The reception unit may receive a broadcast signal from a broadcast signal transmission unit (not shown), such as a TV broadcast signal as an image signal. The reception unit may also receive an image signal from an imaging device, such as a DVD player and a BD player. Also, the reception unit may receive an image signal from a PC. The reception unit may receive an image signal from mobile equipment, such as a smartphone and a smart pad. The reception unit may receive an image signal through a network, such as the Internet, or the reception unit may receive input of image content stored in a storage medium, such as a USB storage medium, as an image signal.

The connection unit 11 is connected to the mounted upgrade apparatus 2 to communicate with the upgrade apparatus 2. The connection unit 11 may communicate with the upgrade apparatus 2 via any communication method, without being particularly limited to, for example, HDMI and USB. The connection unit 11 exchanges data needed for the display apparatus 1 to perform an upgraded function with the upgrade apparatus 2, while communicating with the upgrade apparatus 2, according to control by the controller 15.

The image processing unit 12 processes an image signal received by the reception unit and/or the connection unit 11 to display an image. The display unit 13 displays an image based on the image signal processed by the image processing unit 12.

The storage unit 14 is a nonvolatile memory, such as a flash memory and a hard disk, and stores the setting information 141.

The controller 15 compares an item of the setting information 141 stored in the storage unit 14 with a corresponding item of the upgrade apparatus 2. The controller 15 changes the setting information 141 based on a comparison result, and displays an image based on the changed setting information 142. Although not shown in FIG. 2, the controller 15 may include a nonvolatile memory to store a control program enabling a control operation, a volatile memory to load at least part of the stored control program, and a microprocessor to execute the loaded program.

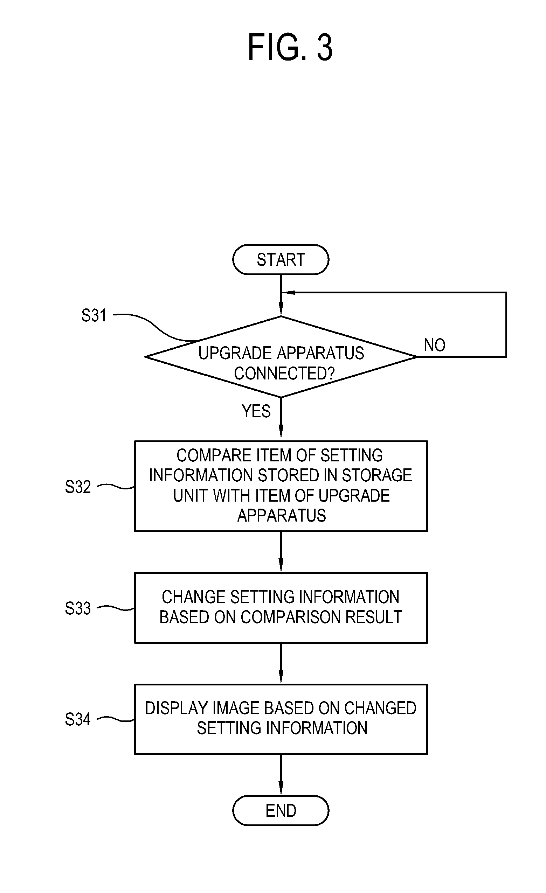

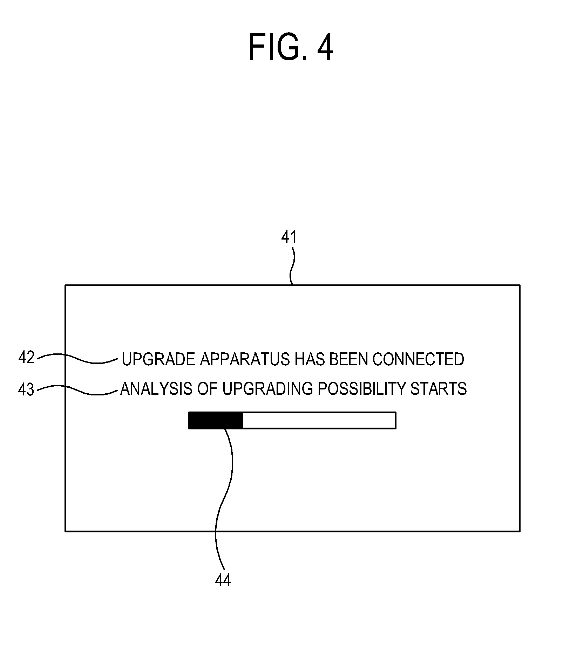

FIG. 3 is a flowchart illustrating a control method of the display apparatus 1. At operation S31, the display apparatus 1 identifies whether the upgrade apparatus 2 is connected to the display apparatus 1. When the upgrade apparatus 2 is connected, the display apparatus 1 compares an item of the setting information 141 stored in the storage unit 14 with a corresponding item of the upgrade apparatus 2 at operation S32. When the upgrade apparatus 2 is connected, the display apparatus 1 may inform a user that the upgrade apparatus 2 is connected. FIG. 4 shows an illustrative UI 41 informing a user that the upgrade apparatus 2 is connected.

As shown in FIG. 4, the UI 41 may include a message 42 informing the user that the upgrade apparatus 2 has been connected. The display apparatus 1 may analyze whether it is possible to upgrade a function using the upgrade apparatus 2. In this case, the UI 41 may further include a message 43 reporting that analysis of a possibility of upgrading a function using the upgrade apparatus 2, has started. Further, the UI 41 may further include a progress bar 44 to display a progression regarding the possibility of upgrading a function. Referring back to FIG. 3, at operation S33, the display apparatus 1 changes the setting information 141 based on a result of the comparison of the items. The display apparatus 1 may store the changed setting information 142 in the storage unit 14. At operation S34, the display apparatus 1 displays an image based on the changed setting information 142.

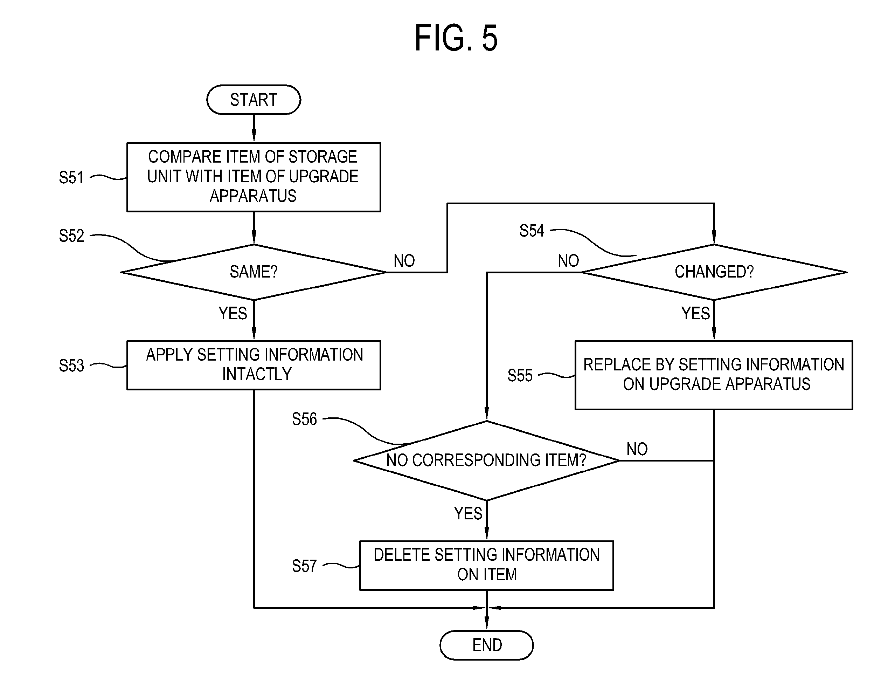

FIG. 5 is a flowchart illustrating a detailed process of the comparison of the items described in FIG. 3. At operation S51, the display apparatus 1 compares an item of the setting information 141 stored in the storage unit 14 with a corresponding item of the upgrade apparatus 2. When it is determined that the item of the setting information 141 stored in the storage unit 14 is the same as the corresponding item of the upgrade apparatus 2 at operation S52, the display apparatus 1 applies the setting information 141 stored in the storage unit 14 in operation S53.

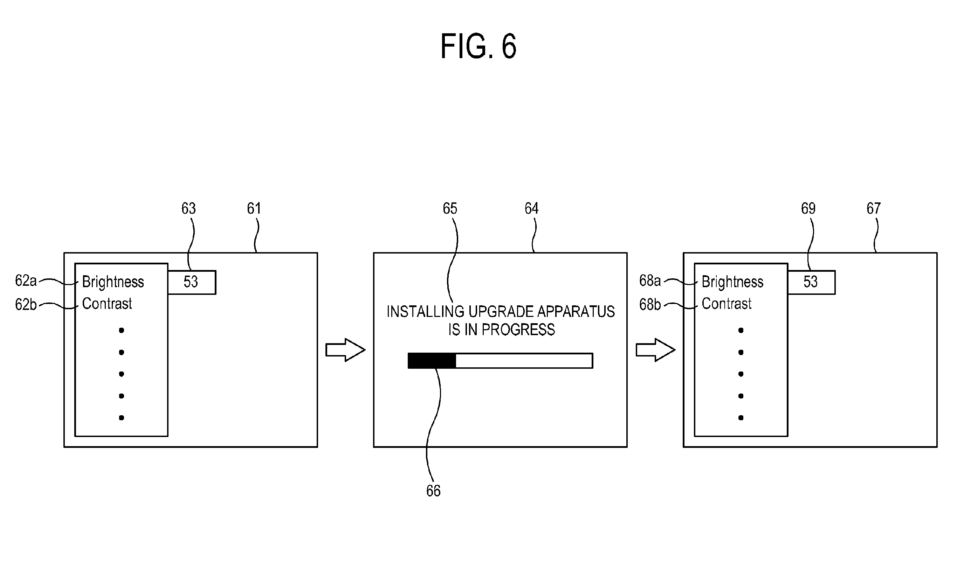

FIG. 6 shows an illustrative UI when the items are the same. A UI 61 shows an illustrative item about a screen among function items of the display apparatus 1 before upgrading. Items 62a, 62b, etc. which are function items related to the screen, may include, for example, brightness, contrast, etc. Reference numeral 63 represents setting information on a brightness of item 62a. The display apparatus 1 may display a UI 64 indicating a state of the setting information changing during an upgrading process. The UI 64 may include a message 65 indicating that upgrading is in progress with respect to connection of the upgrade apparatus 2. The UI 64 may include a progress bar 66 indicating progression of the upgrading. A UI 67 shows an illustrative item related to the screen of the display apparatus 1 after upgrading. In the exemplary embodiment, the item of the setting information 141 stored in the storage unit 14 and the corresponding item of the upgrade apparatus 2 are the same. Thus, as shown in the UI 67, items 68a, 68b, etc. which are items related to the screen after upgrading, also include brightness, contrast, etc. In this case, for example, the setting information 63 on the item 62a before upgrading is applied intact as setting information 69 on a brightness item 68a after upgrading. The display apparatus 1 may inform a user using a UI that setting information on an item is applied as it is.

Referring back to FIG. 5, when it is determined at operation S52 that the item of the setting information 141 stored in the storage unit 14 is not the same as the corresponding item of the upgrade apparatus 2, the display apparatus 141 identifies whether the item of the setting information 141 stored in the storage unit 14 is changed to the corresponding item of the upgrade apparatus 2 at operation S54. When the item of the setting information 141 is changed to the corresponding item of the upgrade apparatus 2, the display apparatus 1 replaces the setting information 141 stored in the storage unit 14 with setting information on the item of the upgrade apparatus 2 at operation S55.

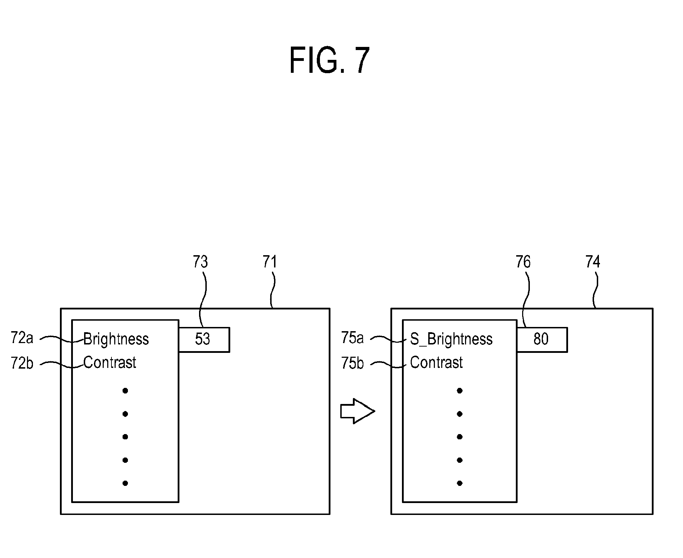

FIG. 7 shows an illustrative UI when the item is changed. A UI 71 shows an illustrative item related to the screen among the function items of the display apparatus 1 prior to upgrading. Items 72a, 72b, etc., which are items related to the screen, may include, for example, brightness, contrast, etc. Reference numeral 73 represents setting information on a brightness item 72a. A UI 74 shows an illustrative item related to the screen of the display apparatus 1 after upgrading and includes items 75a and 75b. In the exemplary embodiment, the item of the setting information 141 stored in the storage unit 14 is changed to the corresponding item of the upgrade apparatus 2. For example, as shown in the UI 74, the brightness item 72a before upgrading is changed to an S_brightness item 75a after upgrading. In this case, the setting information 73 on the brightness item 72a before upgrading may be replaced by setting information 76 on the S_brightness item 75a after upgrading. The display apparatus 1 may inform the user using the UI that an item is changed so that setting information on the item is replaced. Although the exemplary embodiment has been described with reference to a case where a corresponding item is changed, various exemplary embodiments may be illustrated. For example, when a brightness item is changed to an S_brightness item, setting information on the brightness item may be adjusted suitably for the S_brightness item.

Referring back to FIG. 5, when it is determined that the item of the setting information 141 stored in the storage unit 14 has not changed to the corresponding item of the upgrade apparatus 2 at operation S54, the display apparatus 1 identifies whether there is an item of the upgrade apparatus 2 corresponding to the item of the setting information 141 stored in the storage unit 14. If it is determined that there is no item of the upgrade apparatus 2 corresponding with the item of the setting information 141 stored in the storage unit 14 in S56, the display apparatus 1 deletes the setting information 141 on the corresponding item stored in the storage unit 14 at operation S57.

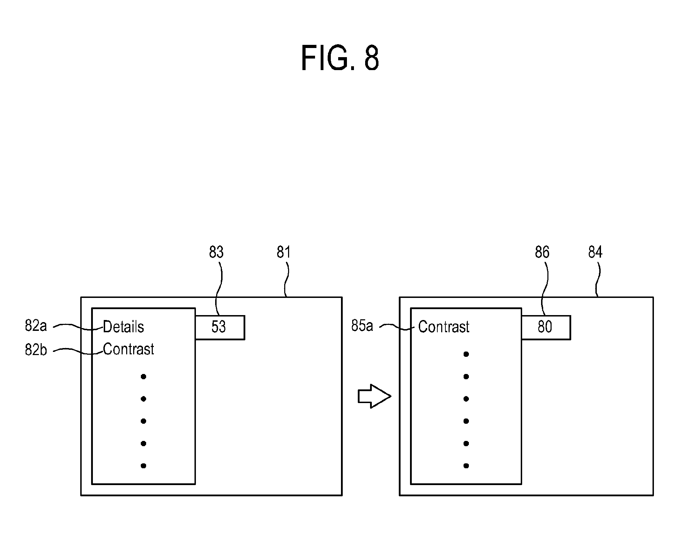

FIG. 8 shows an illustrative UI when there are no corresponding items. A UI 81 shows an illustrative item related to the screen among the function items of the display apparatus 1 before upgrading. Items 82a, 82b, etc. which are items related to the screen, may include, for example, details, contrast, etc. Reference numeral 83 represents setting information on detail item 82a. A UI 84 shows an illustrative item related to the screen of the display apparatus 1 after upgrading. In the exemplary embodiment, there is no corresponding item of the upgrade apparatus to the item of the setting information 141 stored in the storage unit 14. For example, as shown in the UI 84, since there is no item of the upgrade apparatus 2 corresponding to the details item 82a before upgrading, the corresponding item is excluded after upgrading. The UI 84 shows that the same setting information 86 on a contrast item 82b as that before upgrading is maintained as it is after upgrading as item 85a. The display apparatus 1 may inform a user using a UI that setting information on an item is deleted.

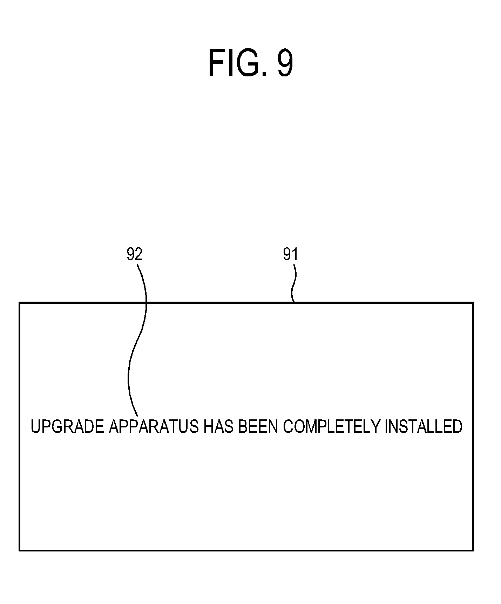

When upgrading using the upgrade apparatus 2 is complete, the display apparatus 1 may inform the user of completion of the upgrading. FIG. 9 shows an illustrative UI 91 informing a user that upgrading has been completed. The UI 91 may include a message 92 informing the user that upgrading is completed.

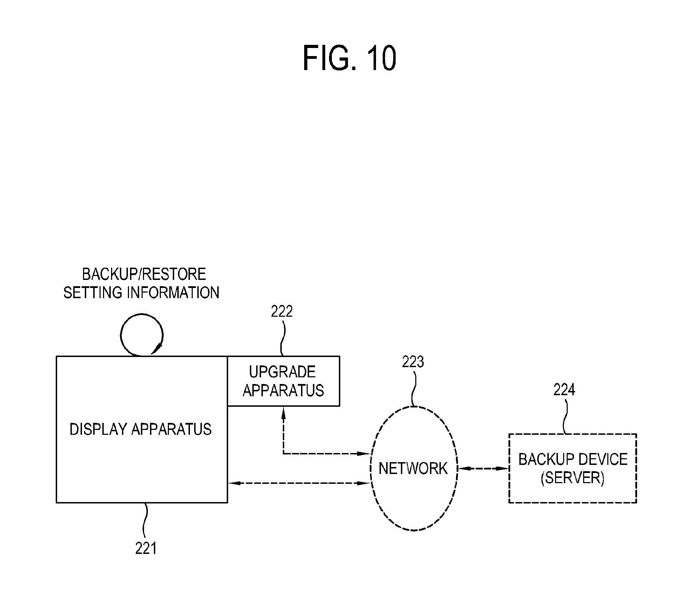

FIG. 10 is a block diagram illustrating a display apparatus 221 according to another exemplary embodiment. In the exemplary embodiment, descriptions of identical or similar elements of the display apparatus 221 to those of the display apparatus 1 described with reference to FIGs. 1 to 9 will be omitted. The display apparatus 221 backs up setting information in preparation for upgrading a function using an upgrade apparatus 222 and restores the setting information corresponding to upgrading. The display apparatus 221 then performs an upgraded function using the upgrade apparatus 222 based on the restored setting information.

Accordingly, even after a function of the display apparatus 221 is upgraded using the upgrade apparatus 222, existing setting information may be properly used, thereby providing improved convenience for a user.

FIG. 11 is a block diagram illustrating a configuration of the display apparatus 221 shown in FIG. 10. The display apparatus 221 includes a reception unit 2211, an image processing unit 2212, a display unit 2213, a connection unit 2214, a first storage unit 2215, and a controller 2216.

The controller 2216 backs up setting information stored in the first storage unit 2215, restores the backed up setting information in response to upgrading a function using the upgrade apparatus 222, and performs the upgraded function based on the resorted setting information.

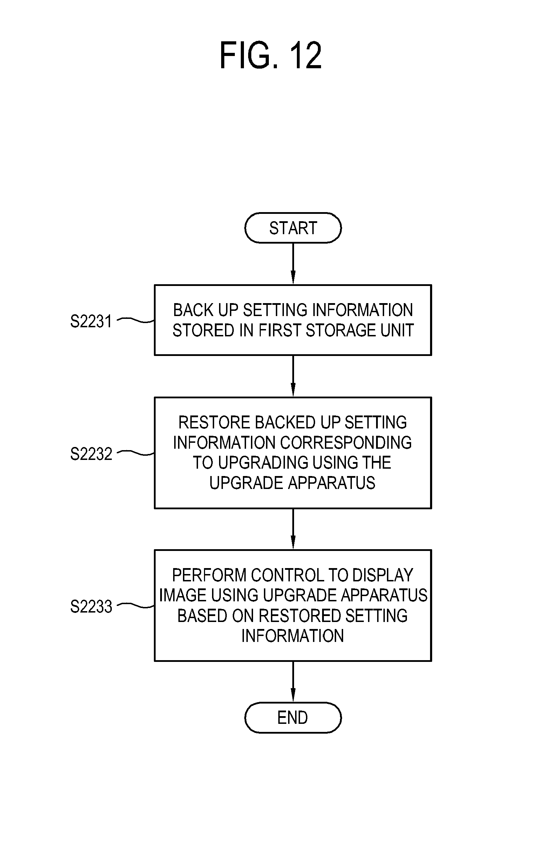

FIG. 12 is a flowchart illustrating a control method of the display apparatus 221 shown in FIG. 11. At operation S2231, the display apparatus 221 backs up setting information stored in the first storage unit 2215. At operation S2232, the display apparatus 221 restores the backed up setting information corresponding to upgrading using the upgrade apparatus 222. At operation S2233, the display apparatus 221 performs an upgraded function, e.g., an upgraded image display function, using the upgrade apparatus 222 based on the restored setting information.

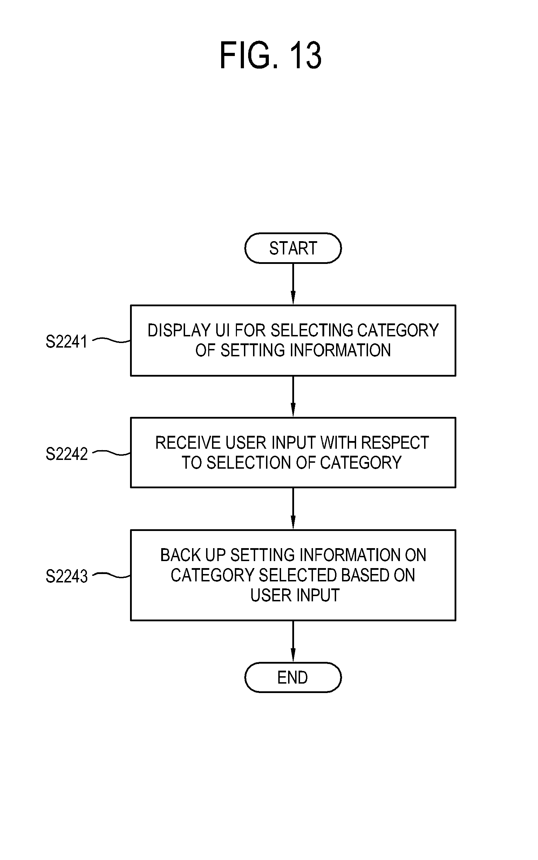

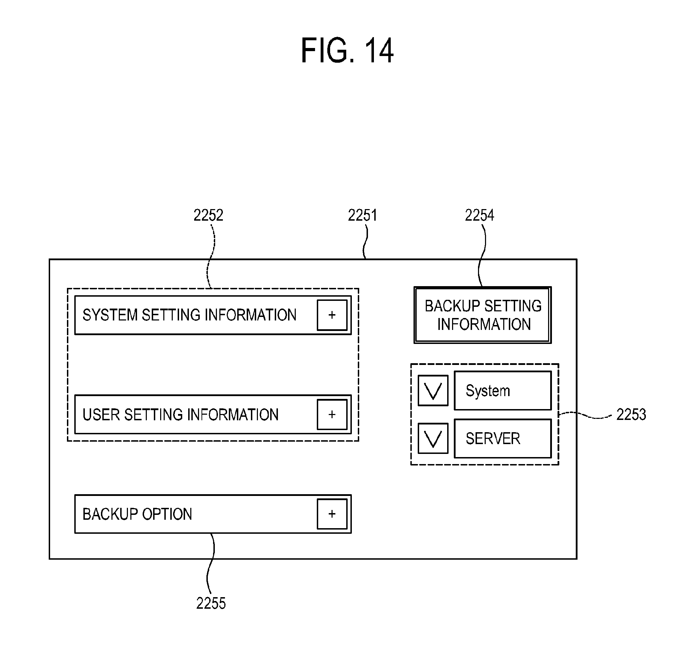

FIG. 13 is a detailed flowchart illustrating the process of backing up the setting information as shown in S2231 of FIG. 12. At operation S2241, the display apparatus 221 displays a UI for selecting a category of setting information to be backed up. FIG. 14 shows an illustrative UI for selecting a category of setting information to be backed up. A UI 2251 includes a plurality of items 2252 corresponding to categories of the setting information to be backed up. For example, the categories of the setting information include setting information on a system ("system setting information") and setting information set by a user ("user setting information"). The UI 2251 may further include a plurality of items 2253 corresponding to locations where the setting information is backed up. For example, a backup location may be a storage unit ("system") in the display apparatus 221 or an external backup device ("server"). As shown in FIG. 11, the display apparatus 221 may further include a second storage unit 2218 to back up the setting information of the display apparatus 221. The display apparatus 221 may further include a communication unit 2219. Communication unit 2219 transmits the setting information to be backed up to the backup device 224 while communicating with the backup device 224 through a network 223. The UI 2251 may further include an item 2255 which allows selection of a backup option. The UI 2251 may also include an item 2254 for executing backup of the setting information.

Referring back to FIG. 13, at operation S2242, the display apparatus 221 receives input from a user regarding selection of a category. The display apparatus 221, as shown in FIG. 11, may further include a user input unit 2217 to receive input from a user regarding selection of a category. The user can select the items 2252, 2253, and 2255 through the user input unit 2217 to designate a desired backup category, a backup location and a backup option, respectively, and the user can select item 2254 to execute backup of the setting information.

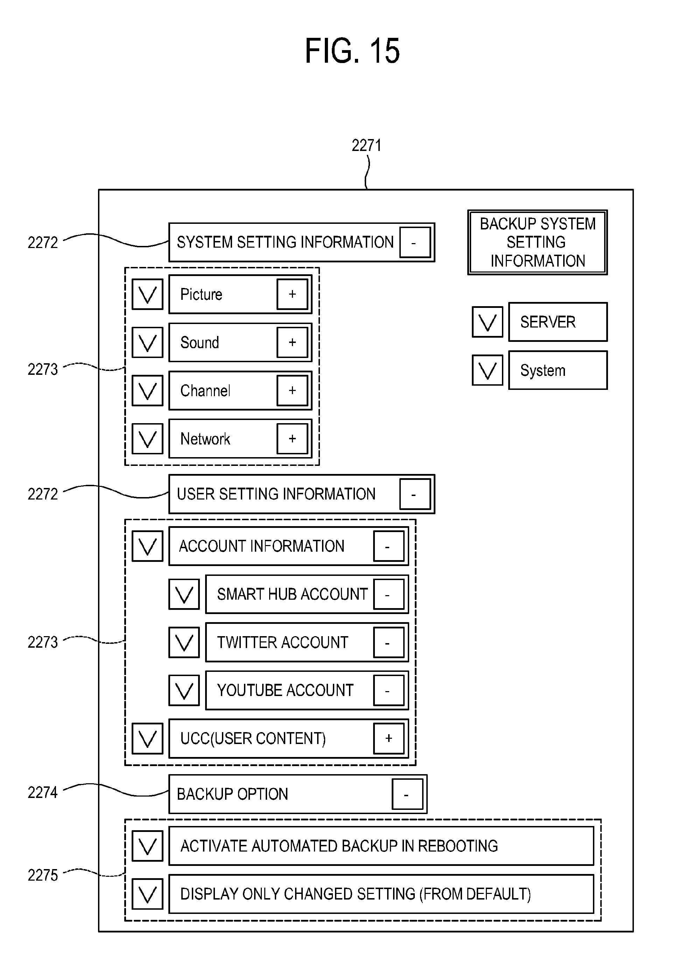

FIG. 15 illustrates the UI 2251 of FIG. 14 in more detail. A UI 2271 as shown in FIG. 15 may include a plurality of items 2272 corresponding to superordinate categories to be backed up and a plurality of items 2273 corresponding to subordinate categories of each of the superordinate categories. For example, subordinate categories a superordinate category of system setting information 2272 may be a Picture, a Sound, a Channel and a Network. Subordinate categories of a superordinate category user setting information 2272 may be a Social Networking Service (SNS) account of a user, e.g., a Smart Hub account, a Twitter account, and a YouTube account. Further, the UI 2271 may include specific option items 2275 of a backup option 2274. Backup options 2274 may include, for example, an option to automatically perform backup in each booting process (activation of automated backup in rebooting) and an option to back up only changed setting information in use among all of the setting information and to display a relevant category (display of only a changed setting as compared with a default). The user may select a superordinate category to be backed up, a subordinate category, and a backup option in various ways using the items 2272, 2273, 2274 and 2275.

Referring back to FIG. 13, at operation S2243, the display apparatus 221 backs up setting information on a category, selected user input, in a designated location. For example, when the user selects a 'system setting information' item 2252 on the UI 2251, the display apparatus 221 backs up the system setting information 2273 in FIG. 15 among the setting information. When the user selects a 'system' item 2253 as a backup location, the display apparatus 221 stores backup setting information in the second storage unit 2218. Alternatively, when the user selects a 'server' item 2253 as the backup location, the display apparatus 221 transmits the setting information to the backup device 224 to be stored in the backup device 224. Also, the display apparatus 221 performs backup based on the backup options 2255, 2274 and 2275 selected by the user. Here, backup may be realized in various ways, without being limited to the example illustrated in FIG. 15. For example, the display apparatus 221 may perform backup periodically at regular intervals, whenever the setting information is changed, when hardware/software is changed, when the user wants to perform a backup, or before upgrading using the upgrade apparatus 222 is conducted.

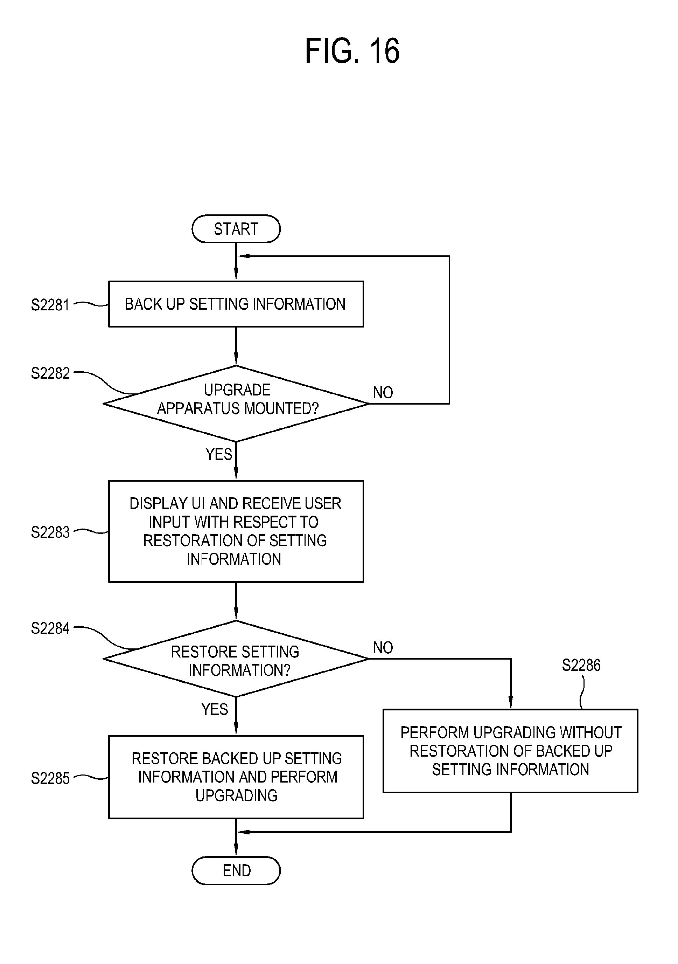

FIG. 16 is a flowchart illustrating another control method of the display apparatus 221. At operation S2281, the display apparatus 221 backs up setting information based on a category, a backup location and a backup option selected by a user. At operation S2282, the display apparatus 221 identifies whether the upgrade apparatus 222 is mounted on the display apparatus 221.

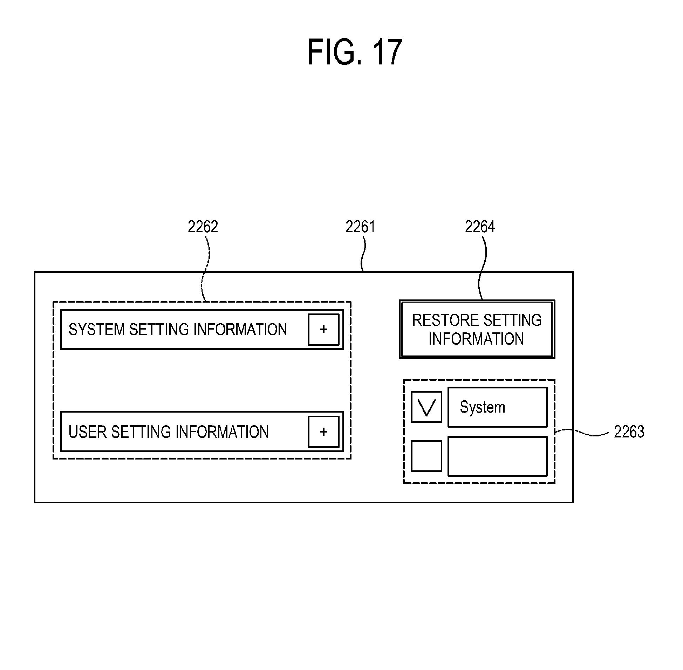

When the upgrade apparatus 222 is mounted, the display apparatus 221 displays a UI with respect to restoration of the setting information and receives input from a user using the UI at operation S2283. FIG. 17 shows an illustrative UI with respect to restoration of setting information. A UI 2261 with respect to restoration of setting information may include a plurality of items 2262 corresponding to categories of the setting information to be restored and a plurality of items 2263 corresponding to locations where the setting information to be restored (backed up setting information) is stored. The UI 2261 may further include an item 2264 corresponding to restoration of setting information. The user selects a desired category to be restored and a location where setting information to be restored is stored using the items 2262 and 2263 and executes restoration of the setting information using the item 2264.

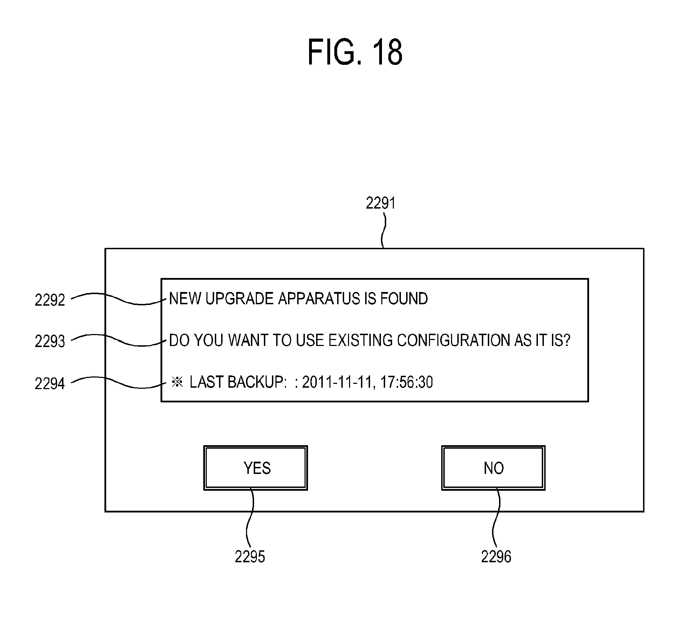

FIG. 18 shows another illustrative UI with respect to restoration of setting information. A UI 2291 with respect to restoration of setting information may include a message 2292 reporting a mounting state of the upgrade apparatus, a message 2293 asking about whether to conduct backup, and information 2294 on a record of the display apparatus 221 backing up the setting information. Further, the UI 2291 may further include an item 2295 and an item 2296 to select whether to restore the setting information.

Referring back to FIG. 16, at operation S2284, the display apparatus 221 identifies whether the user selects restoration. When the user selects restoration, the display apparatus 221 restores setting information on the category and the location selected by the user among the backed up setting information. The display apparatus 221 upgrades a function using the upgrade apparatus 222 at operation S2285. For example, when the user selects a 'system setting information' item 2262 on the UI 2261, the display apparatus 221 restores system setting information among the backed up setting information. Here, detailed system setting information to be restored may be relevant to a screen, a sound, a channel and a network 2273 in FIG. 15.

Further, when the user selects a 'system' item 2263 as a location where the setting information to be restored is present, the display apparatus 221 restores the setting information backed up in the second storage unit 2218. Alternatively, when the user selects a 'server' item 2263 as a restoration location, the display apparatus 221 receives and restores the setting information backed up in the backup device 224 and restores the setting information. The restored setting information may be stored again in the first storage unit 2215 or in another storage unit.

If the user does not select restoration, the display apparatus 221 upgrades a function using the upgrade apparatus 222 without restoring the backed up setting information at operation S2286. In this case, for example, setting information provided from the upgrade apparatus 222 may be stored as a default instead of the backed up setting information.

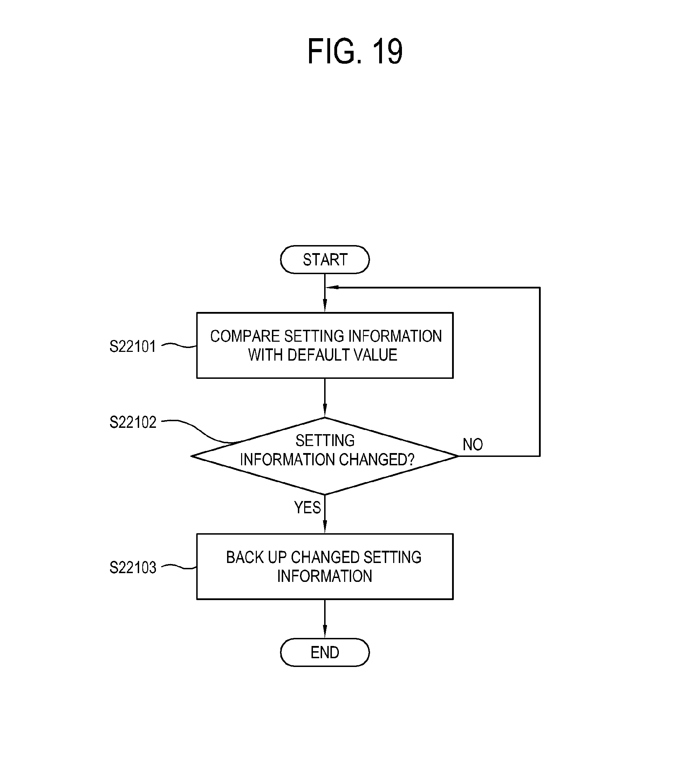

FIG. 19 is a flowchart illustrating another example of a process of backing up the setting information at S2231 shown in FIG. 12. At operation S22101, the display apparatus 221 compares the setting information with a default value. The default value is initial setting information stored in the first storage unit 2215 of the display apparatus 221. At operation S22102, the display apparatus 221 identifies whether the setting information has been changed as compared with the default value. If it is determined that the setting information has been changed as compared with the default value, the display apparatus 221 backs up the changed setting information at operation S22103.

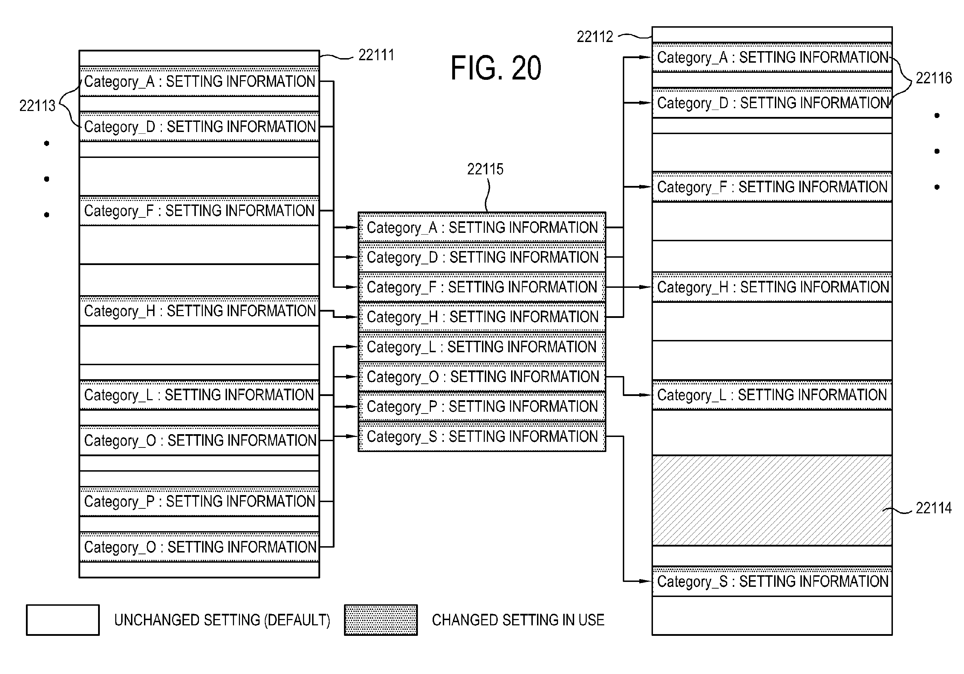

FIG. 20 illustrates memory structures of setting information backed up and restored. Reference numeral 22111 represents a memory structure of setting information stored in the first storage unit 2215. The display apparatus 221 backs up changed setting information 22113 (see 22115) among all setting information as compared with a default value and does not back up unchanged setting information. Changed setting information 22113, such as 'Category_A' and 'Category_D', correspond to the categories of the setting information described with reference to FIGs. 14 and 15. Meanwhile, reference numeral 22112 represents a memory structure of restored setting information. When restoring the setting information, the display apparatus 221 restores the backed up setting information 22115, and the restored setting information 22116 is disposed in a location in the memory structure 22112 relevant to an upgraded function. Reference numeral 22114 represents setting information corresponding to an upgraded function. In upgrading a function with the upgrade apparatus 222, a new function may be added or an existing function may be deleted. Even in this case, existing setting information is restored suitably for an upgrade function, thereby improving compatibility before and after upgrading and enhancing a user's convenience.

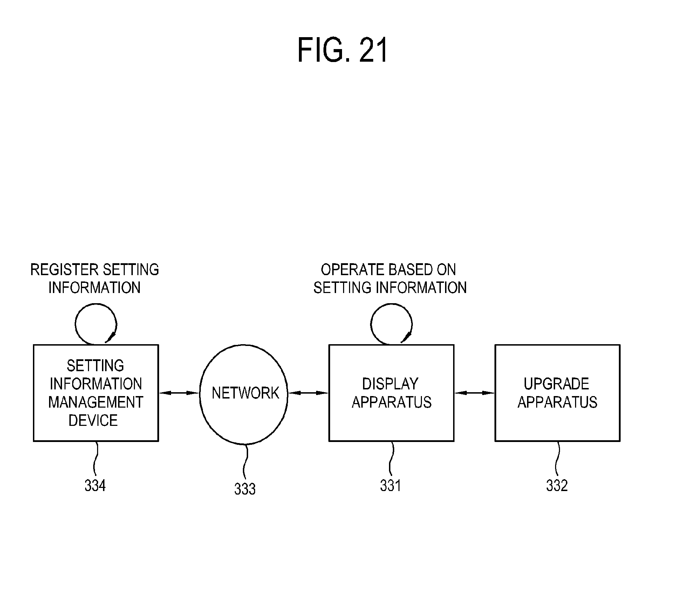

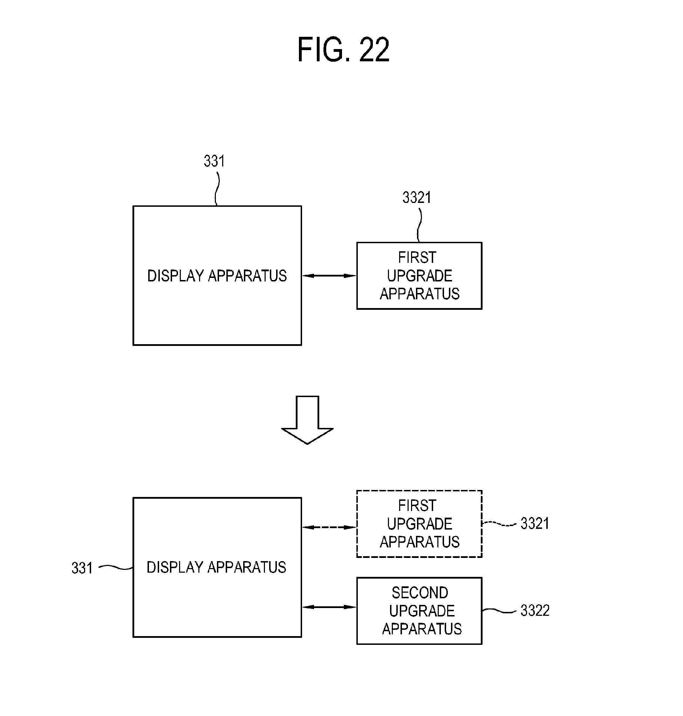

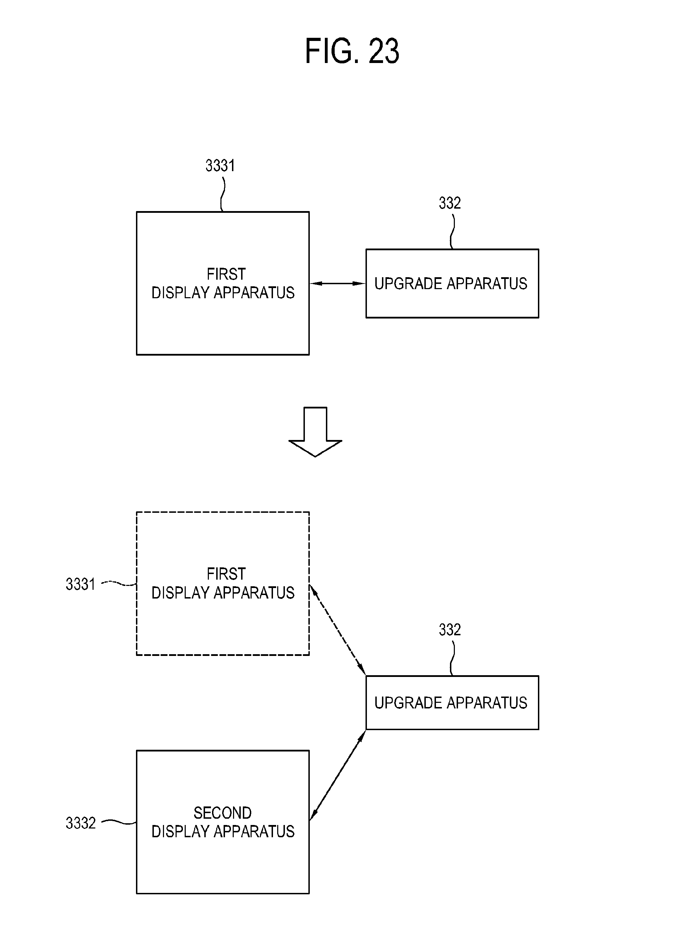

FIG. 21 is a block diagram illustrating a display apparatus 331 according to another exemplary embodiment. In the exemplary embodiment, descriptions of identical or similar elements of the display apparatus 331 to those of the display apparatus 1 and display apparatus 221 described with reference to FIGs. 1 to 20 will be omitted. Any one of a plurality of upgrade apparatuses 332 may be connected to the display apparatus 331. Also, an upgrade apparatus 332 may be connected to any one of a plurality of display apparatuses 331. FIGs. 22 and 23 are block diagrams illustrating a case where the display apparatus 331 or the upgrade apparatus 332 is replaced. As shown in FIG. 22, a first upgrade apparatus 3321, which has been connected to the display apparatus 331, is detached from the display apparatus 331 and then a second upgrade apparatus 3322 is connected to the display apparatus 331. Alternatively, as shown in FIG. 23, the upgrade apparatus 332, which has been connected to a first display apparatus 3331, is separated from the first display apparatus 3331 and then is connected to a second display apparatus 3332.

The display apparatus 331 performs an operation based on setting information. Further, the display apparatus 331 performs an operation by executing a program. The program includes an OS, an application program, or the like. A program executed by the display apparatus 331 can be implemented in a system constituted by the display apparatus 331 and the connected upgrade apparatus 332.

The display apparatus 331 may access a setting information management device 334 via a network 333. The display apparatus 331 registers setting information and program information (collectively referred to as "setting information") in the setting information management device 334, and receives and installs the setting information from the setting information management device 334 when the upgrade apparatus 332 is connected. Further, the display apparatus 331 receives a registered program from the setting information management device 334 and installs and updates the program. Here, the display apparatus 331 transmits identification information on the display apparatus 331 and the connected upgrade apparatus 332 to the setting information management device 334, thereby receiving appropriate setting information and program.

In this way, installing the setting information suitable for the display apparatus 331 and the connected upgrade apparatus 332 and installing and updating a suitable program may be automatically conducted.

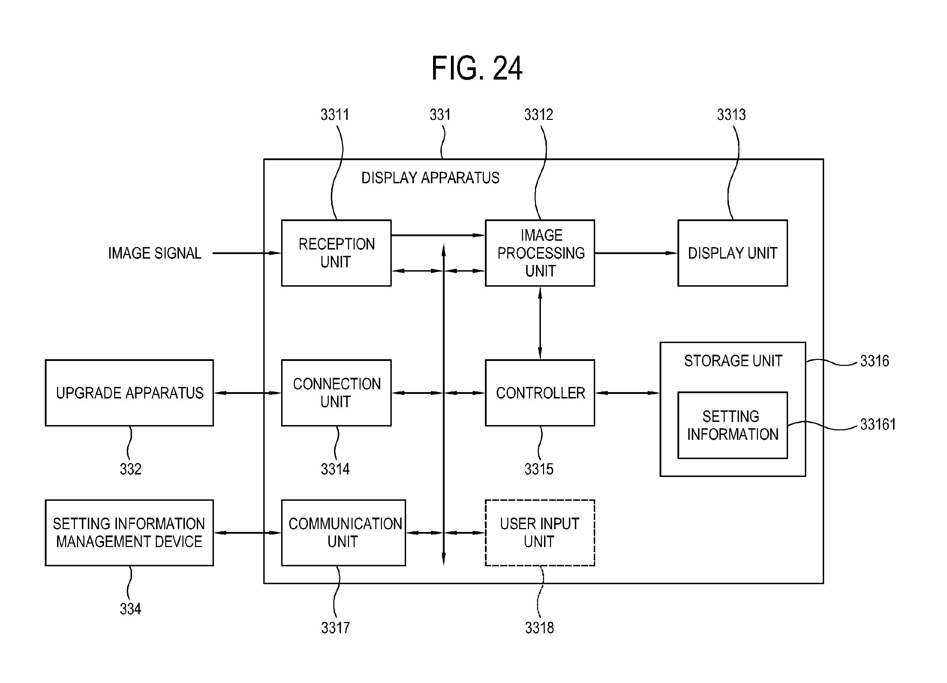

FIG. 24 is a block diagram illustrating a configuration of the display apparatus 331 shown in FIG. 21. The display apparatus 331 includes a reception unit 3311, an image processing unit 3312, a display unit 3313, a connection unit 3314, a controller 3315, a storage unit 3316, and a communication unit 3317.

The controller 3315 performs an upgraded function using the connected upgrade apparatus 332. When the upgrade apparatus 332 is connected to the display apparatus 331, the controller 3315 transmits identification information on the upgrade apparatus 332 to the setting information management device 334, receives setting information 33161 on the upgrade apparatus 332 from the setting information management device 334, and performs an upgraded function using the upgrade apparatus 332 based on the received setting information.

The display apparatus 331 may further include a user input unit 3318 to receive input from a user.

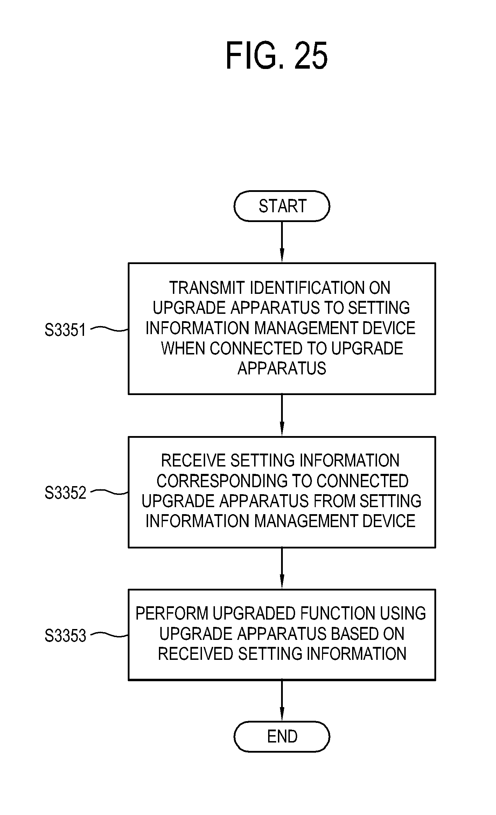

FIG. 25 is a flowchart illustrating a control method of the display apparatus 331 shown in FIG. 24. At operation S3351, when the upgrade apparatus 332 is connected to the display apparatus 331, the display apparatus 331 transmits identification information on the upgrade apparatus 332 to the setting information management device 334. The identification information on the upgrade apparatus 332 may include a unique ID of the apparatus, e.g., a device unique UD (DUID), and a model ID of the apparatus. In another embodiment, the display apparatus 331 may transmit identification information on the display apparatus 331 together with the identification information on the upgrade apparatus 332. The identification information on the display apparatus may include a DUID and a model ID.

At operation S3352, the display apparatus 331 receives setting information on the connected upgrade apparatus 332 from the setting information management device 334. Alternatively, the display apparatus 331 receives setting information on the display apparatus 331 and the connected upgrade apparatus 332 from the setting information management device 334. In another embodiment, the display apparatus 331 may receive a program relevant to the display apparatus 331 and/or the connected upgrade apparatus 332 from the setting information management device 334.

At operation S3353, the display apparatus 331 performs an upgraded function using the upgrade apparatus 332 based on the received setting information. The display apparatus 331 may install the received setting information in the storage unit 3316. Alternatively, the display apparatus 331 may install the received program in the storage unit 3316 or update a program stored in the storage unit 3316 to the received program.

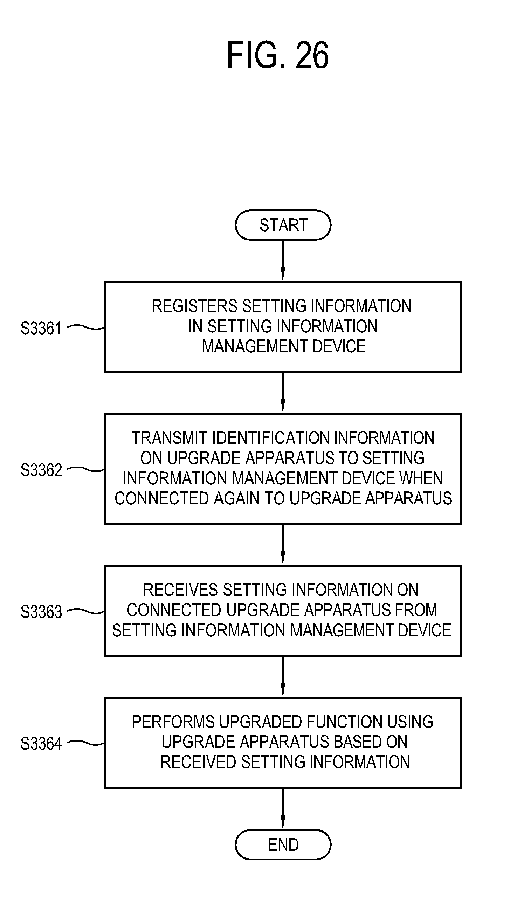

FIG. 26 is a flowchart illustrating another control method of the display apparatus 331 shown in FIG. 24. At operation S3361, when the upgrade apparatus 332 is connected to the display apparatus 331, the display apparatus 331 registers setting information in the setting information management device 334. The display apparatus 331 transmits current setting information to the setting information management device 334, thereby registering the setting information. The current setting information may be setting information 33161 stored in the storage unit 3316. After registration, the upgrade apparatus 332 is detached from the display apparatus 331, and another upgrade apparatus may be connected to the display apparatus 331 for use.

At operation S3362, when the upgrade apparatus 332 is connected again to the display apparatus 331, the display apparatus 331 transmits identification information on the upgrade apparatus 332 to the setting information management device 334. At operation S3363, the display apparatus 331 receives setting information on the connected upgrade apparatus 332 from the setting information management device 334. At operation S3364, the display apparatus 331 performs an upgraded function using the upgrade apparatus 332 based on the received setting information.

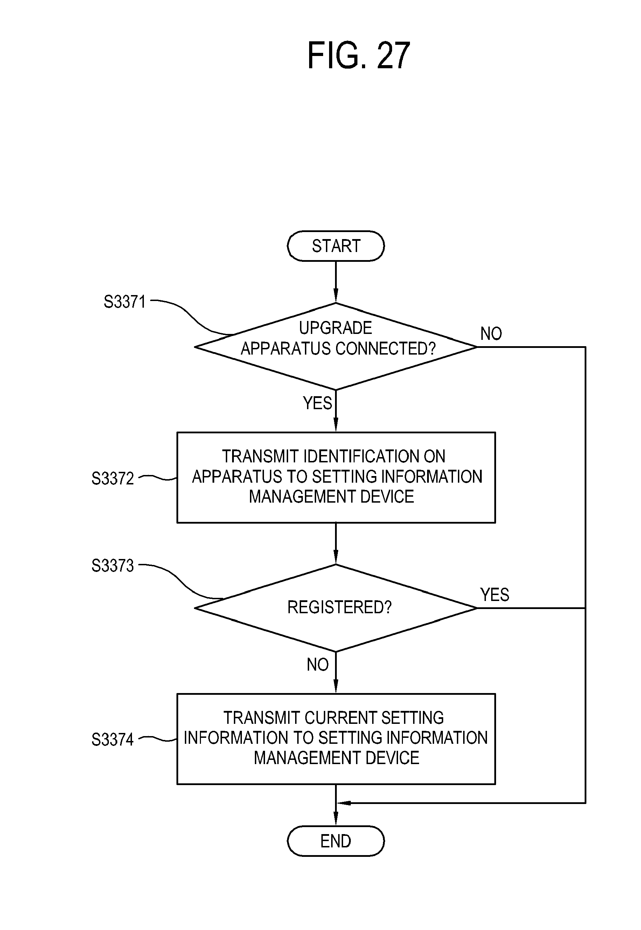

FIG. 27 is a flowchart illustrating another control method of the display apparatus 331 shown in FIG. 24. At operation S3371, the display apparatus 331 identifies whether the upgrade apparatus 332 is connected to the display apparatus 331. When the upgrade apparatus 332 is connected, the display apparatus 331 transmits identification information on the display apparatus 331 and/or the upgrade apparatus 332 to the setting information management device 334 at operation S3372. Then, at operation S3373, the display apparatus 331 identifies whether setting information is previously registered. The display apparatus 331 may ask the setting information management device 334 whether the setting information is registered and may receive a reply, as to whether the setting information is registered, from the setting information management device 334. If the setting information is not previously registered, the display apparatus 331 transmits current setting information to the setting information management device 334 in S3374, thereby registering the setting information.

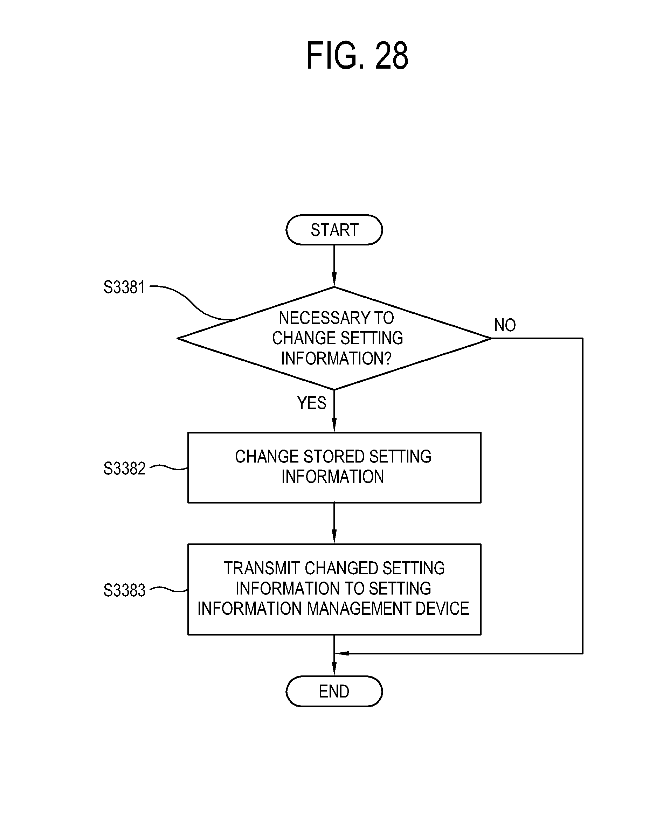

FIG. 28 is a flowchart illustrating another control method of the display apparatus 331 shown in FIG. 24. At operation S3381, the display apparatus 331 identifies whether setting information should be changed. For example, when a configuration of a system has changed or if a user changes a setting, it is necessary to change the setting information accordingly. When the setting information needs to be changed, the display apparatus 331 changes setting information 33161 stored in the storage unit 3316 at operation S3382. At operation S3383, the display apparatus 331 transmits the changed setting information to the setting information management device 334, thereby changing the registered setting information.

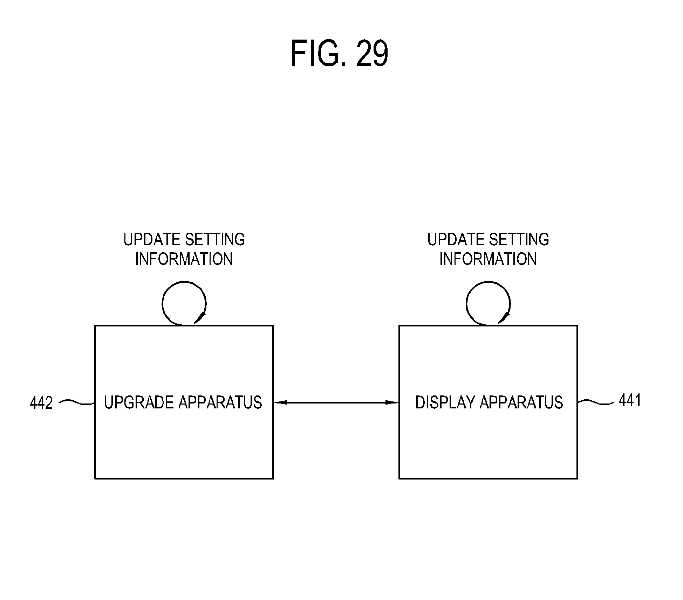

FIG. 29 is a block diagram illustrating a configuration of a display system according to an exemplary embodiment. The display system according to the exemplary embodiment includes a display apparatus 441 and an upgrade apparatus 442. In the exemplary embodiment, descriptions of identical or similar elements of the display apparatus 441 to those of the display apparatus 1, display apparatus 221 and display apparatus 331 described above with reference to FIGs. 1 to 28 will be omitted.

The display apparatus 441 uses setting information (hereinafter, also referred to as "first setting information") when performing a function. The upgrade apparatus 442 uses setting information (hereinafter, also referred to as "second setting information") to perform an upgraded function of the display apparatus 441. When the setting information is changed (or "updated" hereinafter), the display apparatus 441 and the upgrade apparatus 442 collectively update the first setting information and the second setting information accordingly.

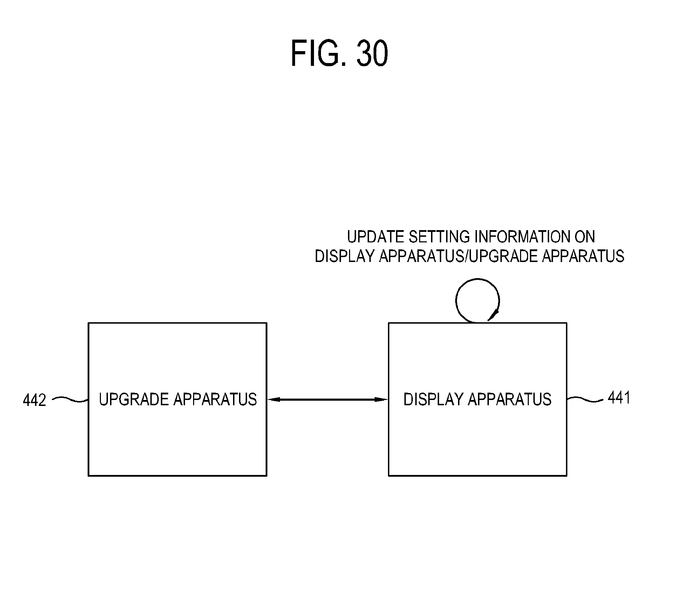

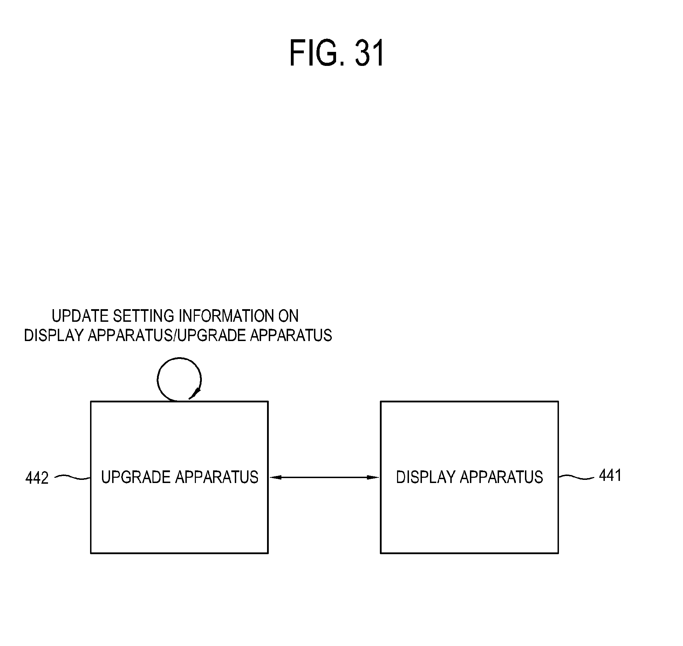

FIG. 29 illustrates a case where the display apparatus 441 updates the first setting information and the upgrade apparatus 442 updates the second setting information. Alternatively, the display apparatus 441 may update both the first setting information and the second setting information. FIG. 30 illustrates a case where the display apparatus 441 updates both the first setting information and the second setting information. In addition, the upgrade apparatus 442 may update both the first setting information and the second setting information. FIG. 31 illustrates a case where the upgrade apparatus 442 updates both the first setting information and the second setting information.

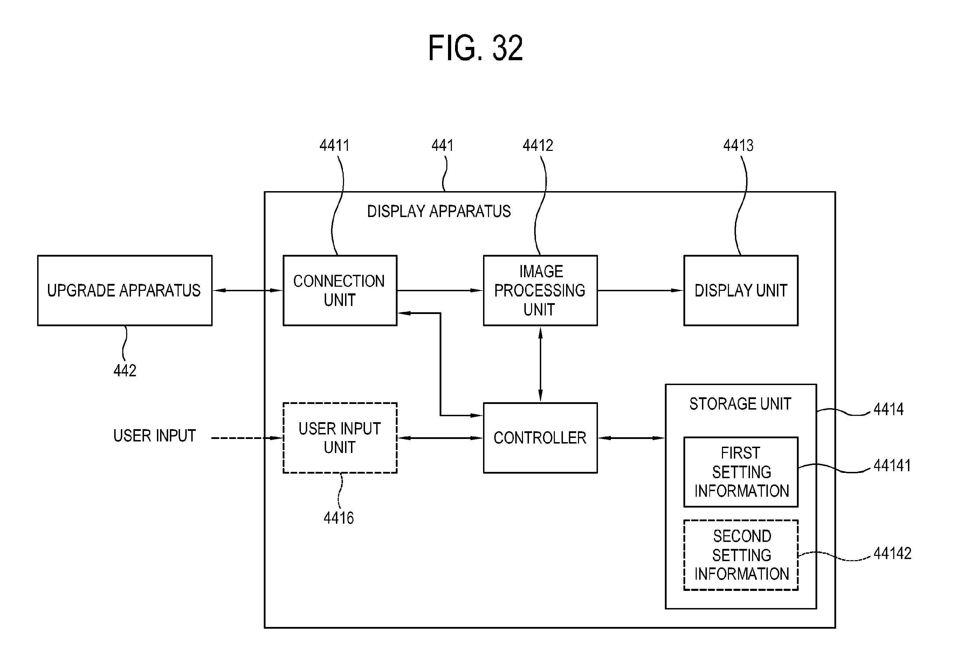

FIG. 32 is a block diagram illustrating a configuration of the display apparatus 441 shown in FIG. 29. The display apparatus 441 includes a connection unit 4411, an image processing unit 4412, a display unit 4413, a storage unit 4414, and a controller 4415.

The controller 4415 updates the first setting information on the display apparatus 441 and the second setting information on the upgrade apparatus 442 when the setting information needs to be updated. When setting information on at least one of a plurality of items is updated, the controller 4415 updates the first setting information on the display apparatus 441 and the second setting information on the upgrade apparatus 442 corresponding to the relevant item. In the exemplary embodiment, an item of setting information is a function item corresponding to the setting information. For example, an item about a screen adjustment function may include brightness, contrast, or details.

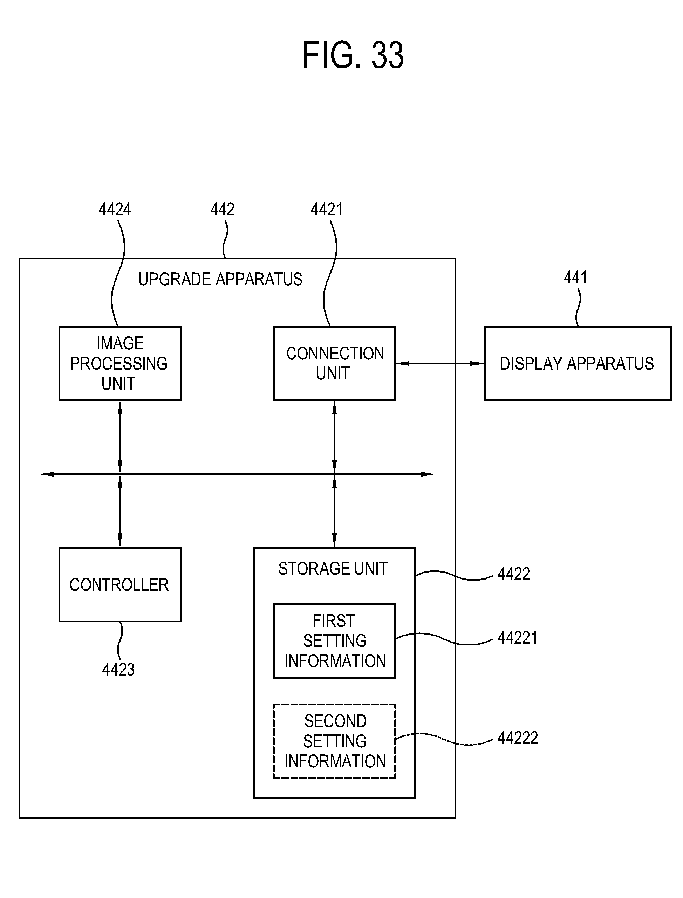

FIG. 33 is a block diagram illustrating a configuration of the upgrade apparatus 442 shown in FIG. 29. The upgrade apparatus 442 includes a connection unit 4421, a storage unit 4422, an image processing unit 4424, and a controller 4423. The connection unit 4421 is connected to the connection unit 4413 of the display apparatus 441 to communicate therewith. The storage unit 4422 stores the first setting information 44221 and second setting information 44222.

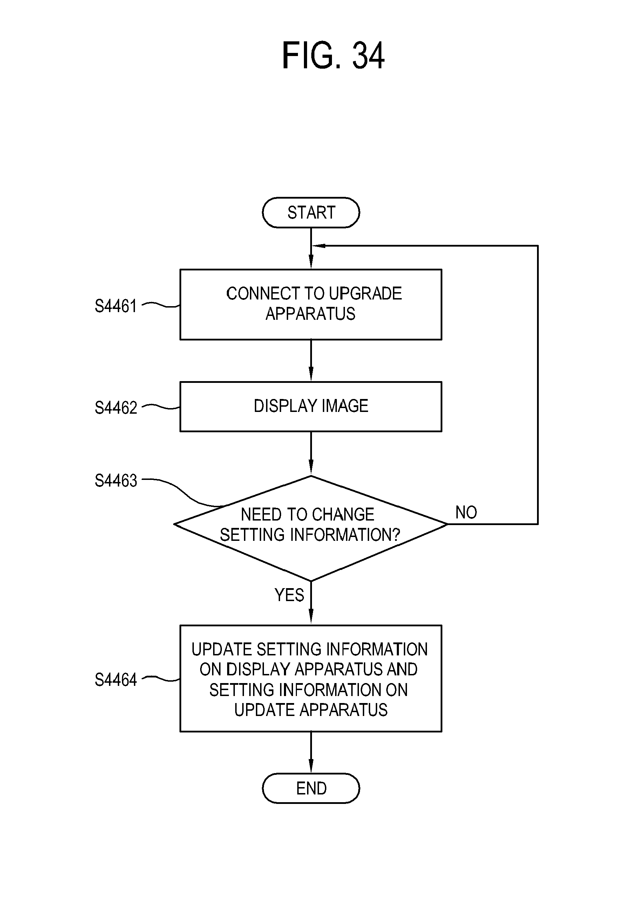

FIG. 34 is a flowchart illustrating a control method of the display apparatus 441 shown in FIG. 32. At operation S4461, the display apparatus 441 is connected to the upgrade apparatus 442. At operation S4462, the display apparatus 441 displays an image based on an image signal processed using the upgrade apparatus 442. At operation S4463, the display apparatus 441 identifies whether it is necessary to update setting information. Updating the setting information is needed, for example, when a user updates a value of a brightness item of a screen adjustment function or when the user changes a value of a volume item of a sound adjustment function. In each case, setting information on a relevant item may need updating based on each changed value.

When setting information needs to be updated, the display apparatus 441 updates the first setting information on the display apparatus 441 and the second setting information on the upgrade apparatus 442 at operation S4464. The display apparatus 441 may update first setting information on an item which needs updating and second setting information on the update apparatus 442 corresponding to the item. For example, when the user adjusts the brightness item of the screen adjustment function, corresponding first setting information on the display apparatus 441 is updated. Also, second setting information on the upgrade apparatus 442 corresponding to the brightness item of the screen adjustment function is updated. The first setting information on the display apparatus 441 and the second setting information on the upgrade apparatus 442 which are updated together may be relevant to the same item or different corresponding items. For example, when an item of the first setting information is "Brightness," a corresponding item of the second setting information may be "Brightness" or "S_Brightness."

The first setting information on the display apparatus 441 and the second setting information on the upgrade apparatus 442 may be stored in any apparatus. For example, the first setting information 44141 on the display apparatus 441 may be stored in the storage unit 4414 of the display apparatus 441 and the second setting information 44222 on the upgrade apparatus 442 may be stored in the storage unit 4422 of the upgrade apparatus 442 ("case 1"). Alternatively, both the first setting information 44141 on the display apparatus 441 and the second setting information 44222 on the upgrade apparatus 442 may be stored in the storage unit 4414 of the display apparatus 441 ("case 2"). In addition, both the first setting information 44141 on the display apparatus 441 and the second setting information 44222 on the upgrade apparatus 442 may be stored in the storage unit 4422 of the upgrade apparatus 442 ("case 3").

The display apparatus 441 and the upgrade apparatus 442 perform communication and control to update the first setting information and the second setting information based on locations where the first setting information and the second setting information are stored. For example, in case 1, the display apparatus 441 updates the first setting information 44141 stored in the storage unit 4414 of the display apparatus 441 and performs communication and control so that the update apparatus 442 updates the second setting information 44222 stored in the storage unit 4422 of the update apparatus 442. In case 2, the display apparatus 441 updates the first setting information 44141 and the second setting information 44142 stored in the storage unit 4414 of the display apparatus 441. In case 3, the display apparatus 441 performs communication and control so that the upgrade apparatus 442 updates the first setting information 44221 and the second setting information 44222 stored in the storage unit 4422 of the upgrade apparatus 442.

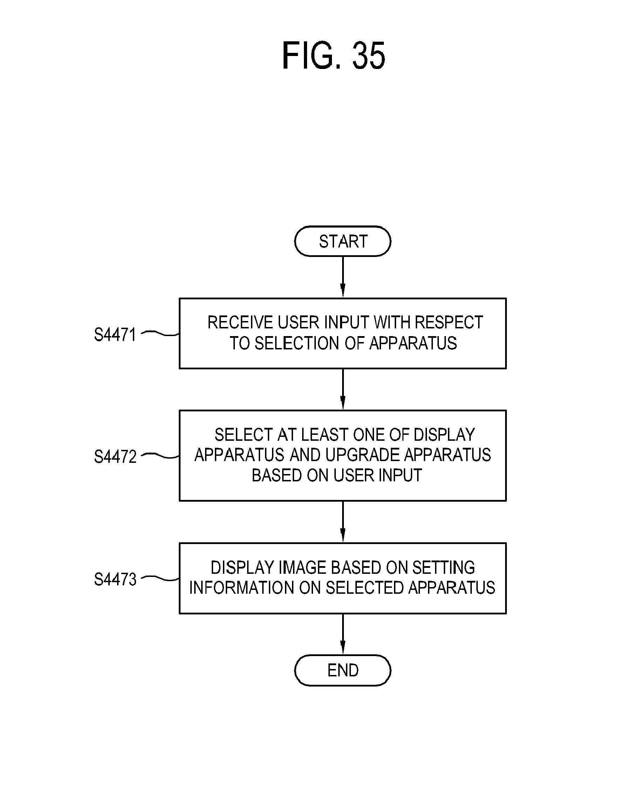

FIG. 35 is a flowchart illustrating another control method of the display apparatus 441 shown in FIG. 32. At operation S4471, the display apparatus 441 receives input from a user with respect to selection of an apparatus. As shown in FIG. 32, the display apparatus 441 may further include a user input unit 4416 to receive input from a user. At operation S4472, the display apparatus 441 selects at least one of the display apparatus 441 and the upgrade apparatus 442 based on the input from the user. For example, the user may select the upgrade apparatus 442 to use an upgraded function or the user may select the display apparatus 441 to use a function before upgrading. At operation S4473, the display apparatus 441 displays an image based on setting information of the selected apparatus. For example, when the user selects the display apparatus 441, the image is displayed based on the first setting information on the display apparatus 441. When the upgrade apparatus 442 is selected, the image is displayed based on the second setting information on the upgrade apparatus 442. Updating data is applied to both the first setting information and the second setting information. Thus, even if the user selects and uses a function of either apparatus, the updating of the data is applied to the setting information, thereby improving convenience for a user.

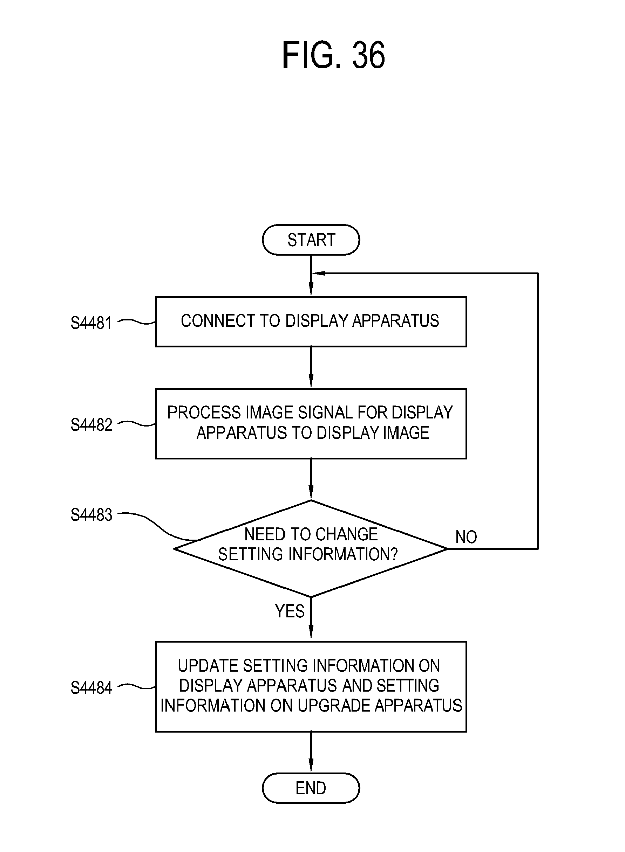

FIG. 36 is a flowchart illustrating a control method of the upgrade apparatus 442 shown in FIG. 33. The upgrade apparatus 442 may control updating of the setting information instead of the display apparatus 441. At operation S4481, the upgrade apparatus 442 is connected to the display apparatus 441. At operation S4482, the upgrade apparatus 442 processes an image signal for the display apparatus 441 to display an image. At operation S4483, the upgrade apparatus 442 determines whether the setting information needs to be updated. When updating of the setting information is necessary, the upgrade apparatus 442 updates first setting information on the display apparatus 441 and second setting information on the upgrade apparatus 442 in S4484. As described with reference to FIG.34, in cases 1 to 3, the upgrade apparatus 442 perform communication and control to update the first setting information on the display apparatus 441 and the second setting information on the upgrade apparatus 442 depending on the location where the first setting information and the second setting information are stored.

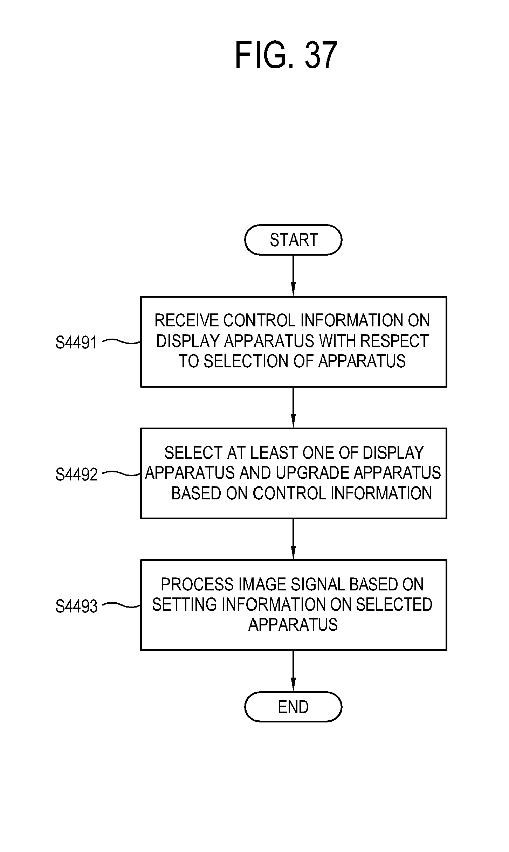

FIG. 37 is a flowchart illustrating another control method of the upgrade apparatus 442 shown in FIG. 33. The upgrade apparatus 442 performs selection of an apparatus. At operation S4491, the upgrade apparatus 442 receives control information on the display apparatus 441 with respect to selection of an apparatus. The display apparatus 441 may transmit control information corresponding to input from a user with respect to selection of an apparatus to the upgrade apparatus 442. At operation S4492, the upgrade apparatus 442 selects at least one of the display apparatus 441 and the upgrade apparatus 442 based on the control information on the display apparatus 441. At operation S4493, the upgrade apparatus 442 processes an image signal based on setting information of the selected apparatus.

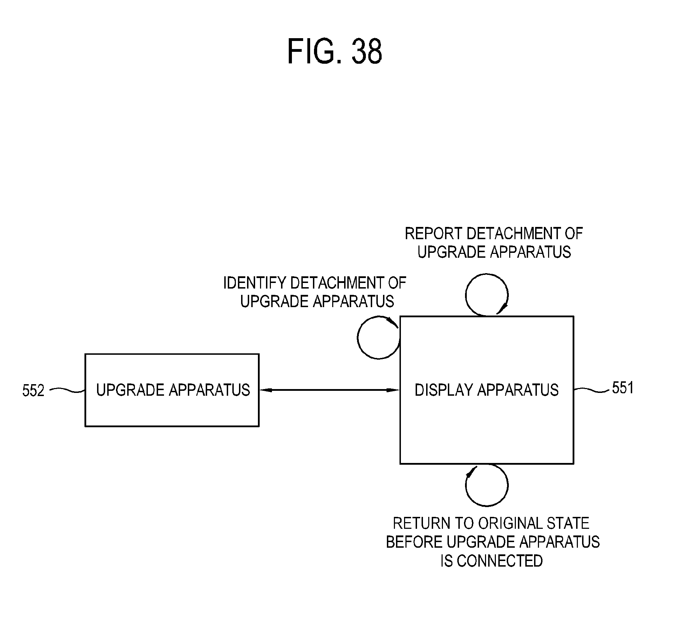

FIG. 38 is a block diagram illustrating a display apparatus 551 according to an exemplary embodiment. In the exemplary embodiment, descriptions of identical or similar elements of the display apparatus 551 to those of display apparatus 1, display apparatus 221, 331 and display apparatus 441 described with reference to FIGs. 1 to 37 will be omitted. When a mounted upgrade apparatus 552 is detached from the display apparatus 551, the display apparatus 551 reports that the upgrade apparatus 552 is detached. Thus, a user may easily recognize the detachment of the upgrade apparatus 552, thereby improving convenience to user.

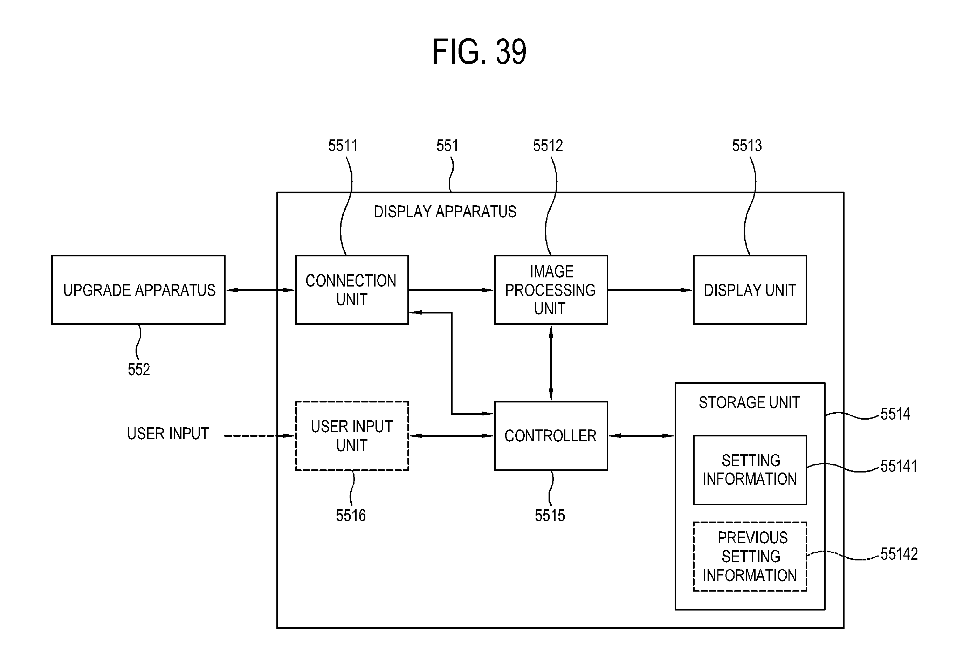

FIG. 39 is a block diagram illustrating a configuration of the display apparatus 551 shown in FIG. 38. The display apparatus 551 includes a connection unit 5511, an image processing unit 5512, a display unit 5513, a storage unit 5514 and a controller 5515. The controller 5515 displays an image using the connected upgrade apparatus 552 and reports detachment of the upgrade apparatus 552 when the upgrade apparatus 552 is detached.

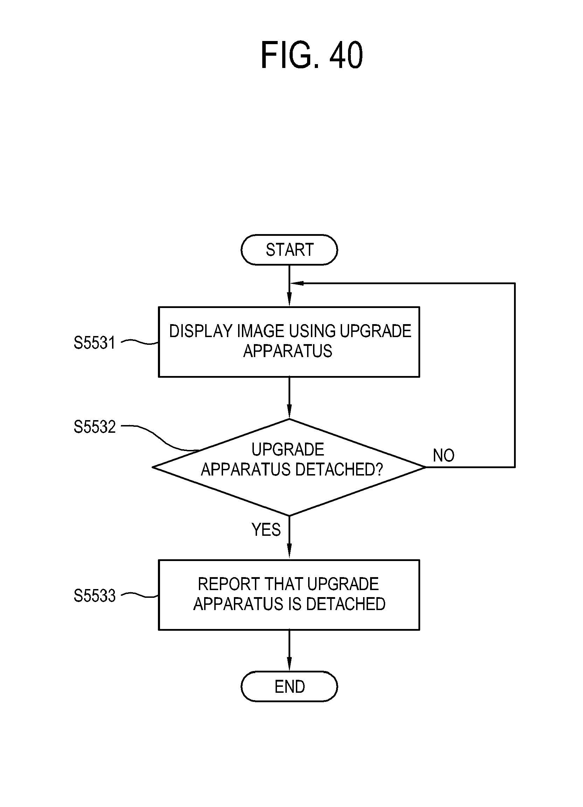

FIG. 40 is a flowchart illustrating a control method of the display apparatus 551 shown in FIG. 39. At operation S5531, the display apparatus 551 displays an image using the upgrade apparatus 552. At operation S5532, the display apparatus 551 identifies whether the upgrade apparatus 552 is detached. For example, when the upgrade apparatus 552 is disconnected from the connection unit 5511, the display apparatus 551 determines that the upgrade apparatus 552 is detached. Alternatively, the display apparatus 551 determines that the upgrade apparatus 552 is detached based on input from a user. For example, the user may want to detach the upgrade apparatus 552 when using an upgraded function and return to a pre-upgrading state. As shown in FIG. 39, the display apparatus 551 may further include a user input unit 5516 to receive input from the user.

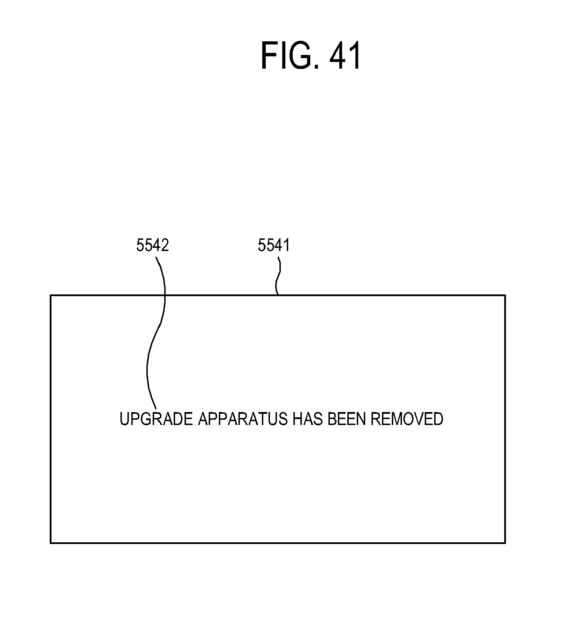

When it is determined that the upgrade apparatus 552 is detached, the display apparatus 551 informs the user that the upgrade apparatus 552 is detached at operation S5533. The display apparatus 551 may inform the user of detachment of the upgrade apparatus 552 using a UI. FIG. 41 shows an illustrative UI 5541 informing the user of the detachment of the upgrade apparatus 552. The UI 5541 may include a message 5542 saying that the upgrade apparatus 552 has been detached.

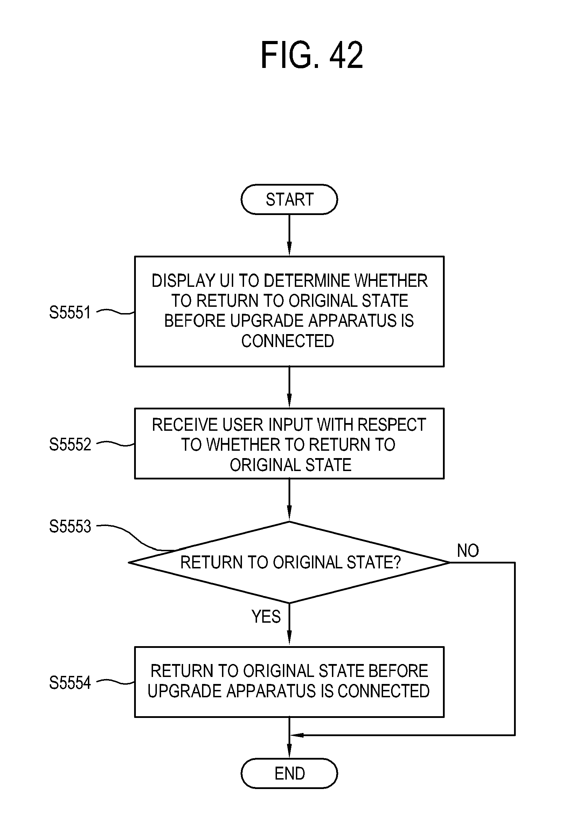

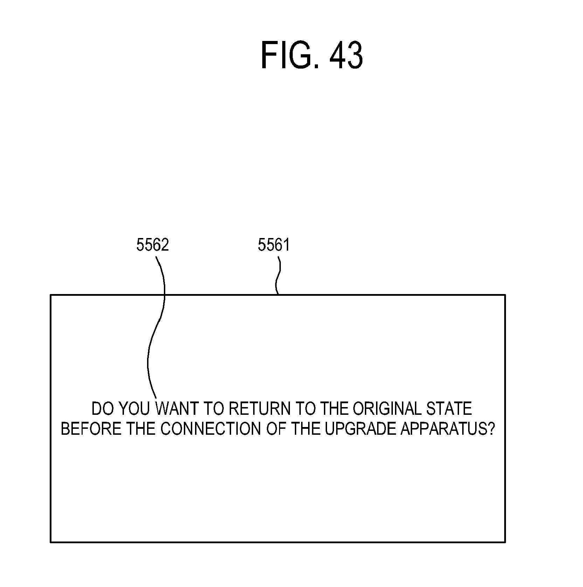

FIG. 42 is a flowchart illustrating control method of the display apparatus 551 shown in FIG. 39. At operation S5551, when the upgrade apparatus 552 is detached, the display apparatus 551 displays a UI which allows a user to determine whether to return the display apparatus 551 to a former state before the upgrade apparatus 552 is connected. FIG. 43 shows an illustrative UI 5561 for determining whether to return to the former state before the upgrade apparatus 552 is connected. The UI 5561 may include a message 5562 asking the user whether to return to the former state before connection of the upgrade apparatus 552.

Referring back to FIG. 42, at operation S5552, the display apparatus 551 receives input from a user as to whether to return to the former state before connection of the upgrade apparatus 552. When it is determined that the user wants to return to the former state at operation S5553, the display apparatus 551 returns to the former state at operation S5554. The display apparatus 551 may return to the former state by restoring setting information 55141 stored in the storage unit 5514 to an original state before the upgrade apparatus 552 is connected. For example, the display apparatus 551 separately stores setting information 55142 in the original state before the upgrade apparatus 552 is connected when the upgrade apparatus 552 is connected, and returns to the former state before the connection of the upgrade apparatus 552 using the stored original setting information 55142.

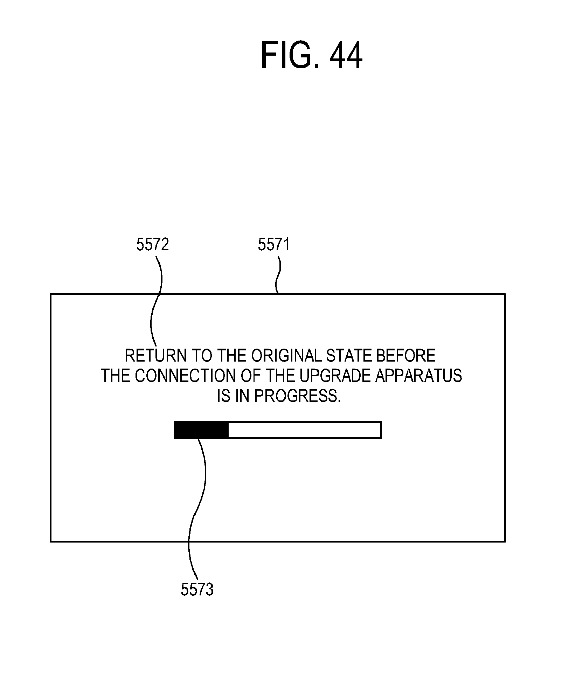

When returning to the former state before connection of the upgrade apparatus 552, the display apparatus 551 may display a UI reporting progression of the return to the former state. FIG. 44 shows an illustrative UI 5571 showing the progression of the return to the former state before the connection of the upgrade apparatus 552. The UI 5571 may include a message 5572 showing that the return to the former state, before the connection of the upgrade apparatus 552, is in progress. Further, the UI 5571 may further include a progress bar 5573 showing the progression of the return to the former state.

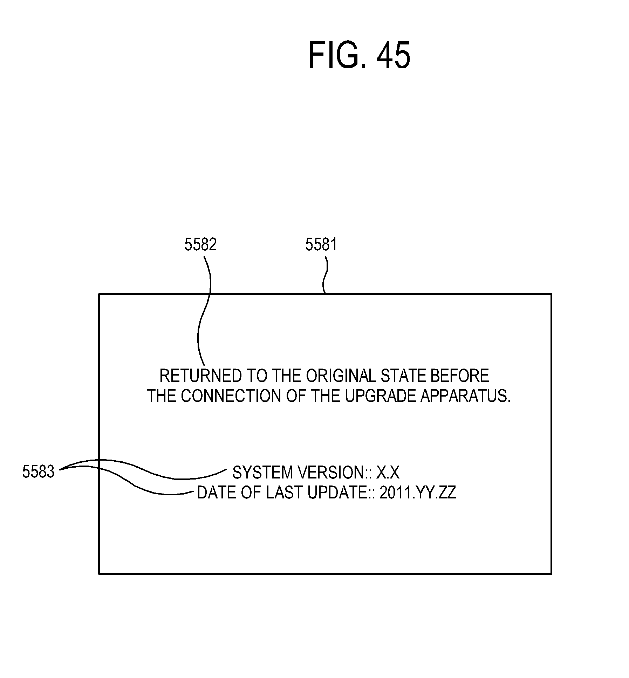

When the return to the former state before connection of the upgrade apparatus 552 is completed, the display apparatus 551 may display a UI showing the completion of the return to the former state. FIG. 45 shows an illustrative UI 5581 showing the completion of the return to the former state before connection of the upgrade apparatus 552. The UI 5581 may include a message 5582 reporting the completion of the return to the former state. Further, the UI 5581 may include information 5583 on the former state before the connection of the upgrade apparatus 552. For example, the information 5583 on the former state may include information on a system version and date of last update before the connection of the upgrade apparatus 552.

Although a few exemplary embodiments have been shown and described, it will be appreciated by those skilled in the art that changes may be made in these exemplary embodiments without departing from the principles of the exemplary embodiments, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a connection unit which is connected to an upgrade apparatus;
an image processing unit which processes an image signal;
a display unit which displays an image based on the image signal;
a storage unit which stores setting information on a plurality of items related to the display apparatus; and
a controller which changes the setting information stored in the storage unit corresponding to the connected upgrade apparatus and which displays the image based on the changed setting information when the upgrade apparatus is connected.

2. The display apparatus of claim 1, wherein the controller compares the items of the setting information stored in the storage unit and items of the upgrade apparatus and changes the setting information according to a result of the comparison.

3. The display apparatus of claim 1 or 2, wherein the controller backs up the setting information and restores the backed up setting information according to an upgrading performed with the upgrade apparatus.

4. The display apparatus of one of claims 1 to 3, further comprising a communication unit which communicates with a setting information management device to manage the setting information, wherein the controller registers the setting information in the setting information management device, and changes the setting information based on the registered setting information when the upgrade apparatus is replaced.

5. The display apparatus of one of claims 1 to 4, wherein when it is necessary to update the setting information, the controller updates the setting information on the display apparatus and setting information on the upgrade apparatus corresponding to a relevant item.

6. The display apparatus of one of claims 1 to 5, wherein the controller displays the image based on a selected one of the setting information on the display apparatus and setting information on the upgrade apparatus.

7. The display apparatus of one of claims 1 to 6, wherein the controller reports that the upgrade apparatus is detached when the upgrade apparatus is detached.

8. A control method of a display apparatus displaying an image based on an image signal, the control method comprising:
identifying whether the display apparatus is connected to an upgrade apparatus;
changing setting information on at least one of a plurality of items about the display apparatus stored in a storage unit according to the connected upgrade apparatus when the upgrade apparatus is connected; and
displaying the image based on the changed setting information.

9. The control method of claim 8, wherein the changing comprises comparing the items of the setting information stored in the storage unit and items of the upgrade apparatus and changing the setting information according to a result of the comparison.

10. The control method of claim 8 or 9, comprising backing up the setting information and restoring the backed up setting information according to an upgrading performed with the upgrade apparatus.

11. The control method of one of claims 8 to 10, further comprising registering the setting information in a setting information management device, and wherein the changing comprises changing the setting information based on the registered setting information when the upgrade apparatus is replaced.

12. The control method of one of claims 8 to 11, further comprising updating setting information on the display apparatus and setting information on the upgrade apparatus corresponding to a relevant item when updating the setting information.

13. The control method of one of claims 8 to 12, wherein the displaying the image comprises displaying the image based on a selected one of the setting information on the display apparatus and setting information on the upgrade apparatus.

14. The control method of one of claims 8 to 13, further comprising reporting that the upgrade apparatus is detached when the upgrade apparatus is detached.
